(19) Europäisches Patentamt
European Patent Office
Office européen des brevets

(11) **EP 1 958 429 B1**

(12) **EUROPÄISCHE PATENTSCHRIFT**

(45) Veröffentlichungstag und Bekanntmachung des Hinweises auf die Patenterteilung:
**14.02.2018 Patentblatt 2018/07**

(21) Anmeldenummer: **06846937.8**

(22) Anmeldetag: **30.11.2006**

(51) Int Cl.:
***H04M 9/08*** *(2006.01)*

(86) Internationale Anmeldenummer:
**PCT/DE2006/002119**

(87) Internationale Veröffentlichungsnummer:
**WO 2007/062634 (07.06.2007 Gazette 2007/23)**

(54) **VERFAHREN ZUR STEUERUNG DES ADAPTIONSVERHALTENS EINER AKUSTISCHEN ECHOKOMPENSATION**

METHOD FOR CONTROLLING THE ADAPTIVE BEHAVIOR OF ACOUSTIC ECHO COMPENSATION

PROCÉDÉ POUR COMMANDER LE COMPORTEMENT D'ADAPTATION D'UN SYSTÈME DE COMPENSATION D'ECHO ACOUSTIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.11.2005 DE 102005057469**

(43) Veröffentlichungstag der Anmeldung:
**20.08.2008 Patentblatt 2008/34**

(73) Patentinhaber: **Voice Inter Connect Gmbh**
**01067 Dresden (DE)**

(72) Erfinder:
• **GRUBER, Christian**
**01157 Dresden (DE)**
• **HIRSCHFELD, Diane**
**01108 Dresden (DE)**

(74) Vertreter: **Lippert Stachow Patentanwälte Rechtsanwälte Partnerschaft mbB Krenkelstrasse 3 01309 Dresden (DE)**

(56) Entgegenhaltungen:
**WO-A-95/23477 US-A1- 2004 264 686**

**Beschreibung**

Die Erfindung betrifft ein Verfahren zur Steuerung des Adaptionsverhaltens einer akustischen Echokompensation nach dem Oberbegriff des Anspruches 1, welches beispielsweise in Freisprech- und Sprachkommunikationsanwendungen genutzt wird, welche eine Reduktion von akustischen Rückkopplungen ermöglichen. Dabei sind vorzugsweise Verfahren zur akustischen Echokompensation einzusetzen, die sich selbsttätig an veränderliche Umgebungsbedingungen anpassen. Diese sollten sich durch eine hohe Echounterdrückungsleistung auszeichnen und sich schnell und robust an die Umgebung adaptieren.

Für die Integration in Telefone, Kommunikationseinrichtungen und andere technischen Geräte sollen die Algorithmen sich durch einen geringen Ressourcenbedarf auszeichnen.

Es existieren in der Literatur (z.B. Haykin, S.: Adaptive Filter Theory. Prentice Hall, 2002; Farhang-Boroujeny,B.: Adaptive Filters - Theory and Applications. Wiley & Sons, 1998.) verschiedene Verfahren zur akustischen Echokompensation (LMS - Least Mean Square, NLMS - Normalized LMS, FBLMS - Fast block LMS, RLS - Recursive Least Square, etc.). Für eine Umsetzung auf einem Digitalen Signalprozessor wird ein Verfahren benötigt, welches sich durch hohe Leistungsfähigkeit, aber durch geringen Ressourcenbedarf auszeichnet.

Frequenzbereichsbasierte LMS-Verfahren weisen sowohl einen geringen Rechenbedarf, als auch eine hohe Echounterdrückungsleistung und ein schnelles Adaptionsverhalten auf, sind also für die Aufgabenstellung prädestiniert.

Der Nachteil bei diesen Verfahren besteht in ihrer geringen Robustheit gegenüber störenden Einflüssen wie Gegensprechen und Hintergrundrauschen.

Bisher sind keine Lösungen für frequenzbereichsbasierte Verfahren bekannt, die gleichermaßen ein schnelles Adaptionsverhalten aufweisen und dabei robust gegenüber störenden Einflüssen sind. Bekannte Lösungen arbeiten meist mit einer expliziten Gegensprechdetektion und schalten die Adaption während des Gegensprechens ab.

Die US 2004/0264686 A1 beschreibt eine statistische Steuerung mit adaptivem Filter für die digitale akustische Echosteuerung in Freisprechgeräten zum Erzielen von konsistenteren Echolöschungsergebnissen (d.h. höherer Ausgangssignalqualität) und einfacheren Realisierungen von AEC-Einheiten. Die Verbesserung unter Verwendung der einfachen statistischen adaptiven Filtersteuerung wird erreicht, indem eine gemeinsame Steuerung eines Echolöschers und eines Nachfilters optimiert wird. Dabei erfolgt eine Echokompensation mit einer frequenz- und zeitabhängigen und an eine Umgebungssituation angepassten Steuerung einer Adaptionsschrittweite eines Echokompensationsfilters. Die Ermittlung der Adaptionsschrittweite des Echokompensationsfilters erfolgt unter Nutzung eines Übertragungsfunktionsabstandes zwischen einer Raumimpulsantwort und einer Impulsantwort des Echokompensationsfilters.

Aus US2005/0147235A1 ist ein Verfahren zur Schätzung der frequenzabhängigen Schrittweite bekannt, welches die spektralen Leistungsdichten des Lautsprechersignals sowie des Ausgangssignals der Echokompensation nutzt und keinen VAD bzw. keinen expliziten Double-Talk-Detector benötigt. Der Nachteil des Verfahrens besteht darin, dass nicht die Signalleistung des Restechos zur Berechnung der Schrittweite herangezogen wird, sondern lediglich die Signalleistung des Ausgangssignals der Echokompensation. Es erfolgt daher keine Steuerung der Schrittweite in Abhängigkeit von der Stärke der Störgeräusche.

Aus US2005/0063536A1 ist ein Verfahren bekannt, welches bei der Berechnung der Adaptionsschrittweite das Quadrat des Systemabstandes verwendet. Dieser wird durch eine zweite nachgelagerte Echokompensation geschätzt, welche das nach der ersten AEC verbleibende Restecho kompensiert. Die Übertragungsfunktion des zweiten AEC-Filters kann als Systemabstand interpretiert werden.

Der Nachteil des Verfahrens besteht zum einen in zusätzlichem Aufwand durch Verwendung eines zweiten AEC-Filters. Weiterhin wird bei der Adaption des Echofilters das im Mikrofonsignal enthaltene Störgeräusch nicht berücksichtigt. Schließlich erfolgt die Steuerung der Schrittweite nur durch einen adaptiven Einzelfaktor, während bei dem erfindungsgemäßen Verfahren eine frequenzabhängige Schrittweite in Form eines Schrittweitenvektors verwendet wird, welcher eine feinere Abstimmung der Schätzung der Filterkoeffizienten der AEC unter Berücksichtigung der herrschenden Umgebungsbedingungen sowie der bereits erreichten Adaptionsgüte erlaubt.

Daher besteht die Aufgabe der Erfindung darin, ein Verfahren zur Steuerung des Adaptionsverhaltens einer akustischen Echokompensation anzugeben, welches sich durch eine Erhöhung der Robustheit gegenüber Störeinflüssen bei gleich bleibend hoher Adaptionsgeschwindigkeit gegenüber bekannten FBLMS-Verfahren auszeichnet.

Es wurde ein Verfahren entwickelt, welches sowohl eine schnelle und robuste Schätzung von Störeinflüssen als auch eine Bewertung der Adaptionsgüte ermöglicht. Unter Nutzung dieses Verfahrens wurden bekannte Adaptionsalgorithmen so weiterentwickelt, dass sie eine optimale Adaptionsgeschwindigkeit unter allen Bedingungen erreichen.

Bei der Erfindung handelt es sich um eine kombinierte Lösung zur Echokompensation und Störgeräuschschätzung, welche eine robuste Schätzung der Störeinflüsse wie Hintergrundrauschen oder Gegensprechsignale ohne die Notwendigkeit eines VAD erlaubt, die Störgeräuschschätzung für die Adaption des Echokompensationsfilters nutzt und zeitlich veränderliche, frequenzabhängige Steuerparameter für die Adaption (frequenzabhängige Schrittweite) daraus ableitet.

Die erfindungsgemäße Lösung bietet somit die nachfolgend aufgeführten Vorteile.

- Steuerung der Schrittweite des Adaptionsverfahrens, so dass die optimale Adaptionsgeschwindigkeit unter allen möglichen Störeinflüssen erreicht wird

- robuste und implizite Schätzung der Störeinflüsse, die sowohl zur Steuerung der Schrittweite des Adaptionsverfahrens, als auch zur gleichzeitigen Unterdrückung von Störgeräuschen und des Restechosignals genutzt werden kann

- keine Notwendigkeit einer expliziten Gegensprechdetektion

- geringerer Rechenbedarf gegenüber anderen Algorithmen mit vergleichbaren Adaptionseigenschaften

Die Erfindung soll nachfolgend anhand eines Ausführungsbeispiels näher erläutert werden. In den zugehörigen Zeichnungen zeigt:

- Figur 1 - den allgemeinen Aufbau einer Akustischen Echokompensation,

- Figur 2 - ein Blockschaltbild zum FBLMS-Verfahren zur Akustischen Echokompensation, mit $\underline{\mu}(l)$ als Schrittweite, welche die Adaption des Echokompensationsfilters steuert,

- Figur 3 - das Blockbildungsschema zum FBLMS-Verfahren zur Akustischen Echokompensation,

- Figur 4 - den Aufbau des Gesamtsystems mit Restechoredulctionsfilter und Störgeräuschreduktionsfilter,

- Figur 5 - die Funktionsweise des Restechoreduktionsfilters,

- Figur 6 - das Blockschaltbild zum erfindungsgemäßen Restecho- und Geräuschreduktionsfilter,

- Figur 7 - das Blockbildungsschema zur Restecho- und Geräuschreduktion, und

- Figur 8 - das Blockschaltbild zur erfindungsgemäßen Ermittlung der Schrittweite $\underline{\mu}(l)$.

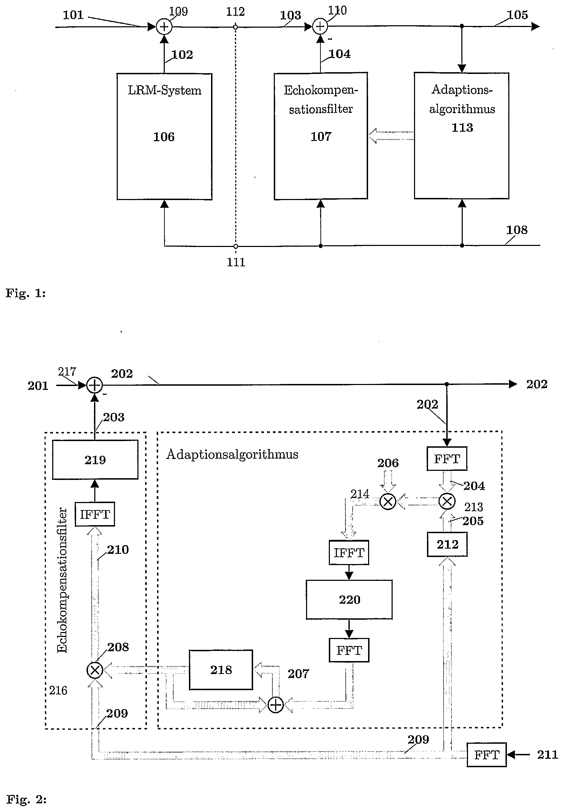

Fig. 1 beschreibt die Wirkungsweise der akustischen Echokompensation: Eingangssignale für die Echokompensation sind das durch den Lautsprecher (**111**) abgestrahlte Signal des fernen Sprechers $x(k)$ (**108**), sowie das durch das Mikrofon (**112**) erfaßte Mikrofonsignal $m(k)$ (**103**), welches das mit Störgeräuschen $n(k)$ additiv überlagerte Sprachsignal des nahen Sprechers $s(k)$ (**101**), sowie das additiv überlagerte (**109**) durch die Raumübertragungsfunktion (**106**) überformte Signal des fernen Sprechers oder auch Echosignal $y(k)$ (**102**) enthält.

Das Echokompensationsfilter (**107**) mit der Filterimpulsantwort $\hat{g}(k,i)$ berechnet ein geschätztes Echosignal $\hat{y}(k)$ (**104**), welches anschließend vom Mikrofonsignal $m(k)$ (**103**) subtrahiert wird (**110**), um das Ausgangssignal $q(k)$ (**105**) zu berechnen. Die Differenz zwischen dem tatsächlichen Echosignal $y(k)$ (**102**) und dem geschätzten Echosignal $\hat{y}(k)$ (**104**) wird als Restechosignal $e(k)$ bezeichnet. Das Ausgangssignal $q(k)$ (**105**) enthält neben dem Restechosignal $e(k)$ weiterhin das Sprachsignal des nahen Sprechers $s(k)$ und das Störgeräusch n(k). Der Adaptionsalgorithmus (**113**) minimiert dabei die Energie des Restechos $e(k)$.

Der für die Adaption verwendete AEC-Algorithmus ist der aus der Fachliteratur bekannte FBLMS-Algorithmus (Fast Block Least Mean Square-Algorithmus). Bei diesem Verfahren erfolgt die Adaption des Filters und die Berechnung des geschätzten Echosignals $\hat{y}(k)$ im Frequenzbereich und beruht auf einer blockweisen Verarbeitung (vgl. Fig. 2).

Zu Beginn werden die Eingangssignale in Blöcke zerlegt (**221**). Nach der Verarbeitung wird das Ausgangssignal durch Aneinanderfügen aufeinander folgender Ausgangssignalblöcke gewonnen (**222**).

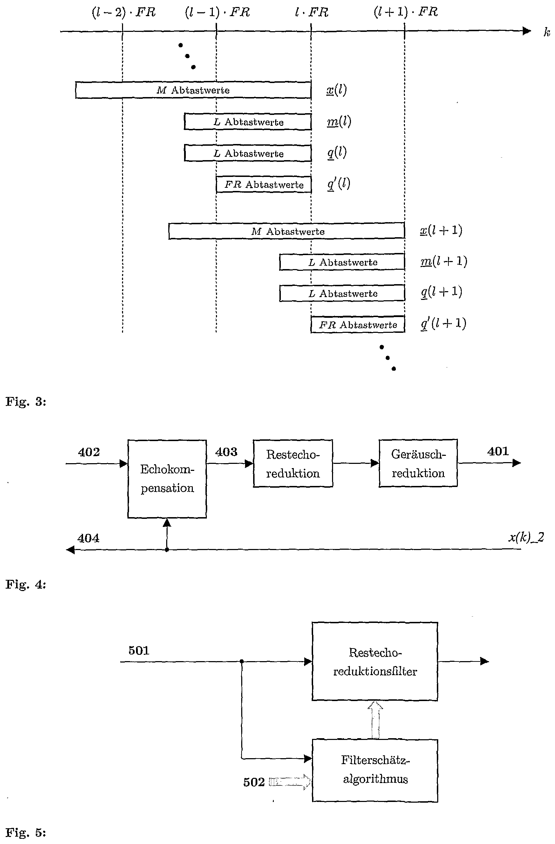

Das zugehörige Blockbildungsschema zeigt Fig. 3. Aufeinanderfolgende Blöcke werden mit dem Blockindex $l$ indiziert. Die Framerate, das heißt die Anzahl der Abtastwerte, um die zwei aufeinander folgende Blöcke zueinander verschoben sind, wird mit $FR$ bezeichnet. Die Anpassung der geschätzten Raumimpulsantwort erfolgt iterativ mit jedem neuen Eingangssignalblock, das heißt alle $FR$ Abtastwerte. Der Blockindex $l$ stellt damit auch gleichzeitig den Iterationsindex für die geschätzte Raumimpulsantwort dar. $N$ ist die Länge des Echokompensationsfilters und $L$ die so genannte Blocklänge. Vor der Transformation in den Frequenzbereich und der weiteren Verarbeitung werden alle Blöcke durch Einfügen von Nullen auf die Länge $M$ erweitert. $M$ ist somit die FFT-Länge und ist deshalb eine Zweierpotenz. Es besteht der Zusammenhang $M = N + L - 1$.

Die beiden Eingangssignalblöcke sind

$$\underline{x}(l) = [x(l \cdot FR - M + 1), \dots, x(l \cdot FR)]^{T} \tag{1}$$

für das Lautsprechersignal (**211**), und

$$\tilde{\underline{m}}(l) = [\underbrace{0, \ldots, 0}_{N-1}, m(l \cdot FR - L + 1), \ldots, m(l \cdot FR)]^T \tag{2}$$

für das Mikrofonsignal (**201**).

Das geschätzte Echosignal $\hat{y}(k)$ (**203**) erhält man durch eine Faltung des Lautsprechersignals $x(k)$ (**211**) mit der geschätzten Raumimpulsantwort $\hat{g}(k,i)$ (siehe Fig. 2). Der FBLMS-Algorithmus verwendet hierfür das Prinzip der schnellen Faltung nach der Overlap-Save-Methode (vgl. Oppenheim, A. V.; Schäfer, R. W.: Zeitdiskrete Signalverarbeitung. Oldenbourg, 1995.). Das bedeutet, der Lautsprechersignalblock $\underline{x}(l)$ und der geschätzte Raumimpulsantwortvektor $\hat{\underline{g}}(l)$ werden in den Frequenzbereich transformiert, miteinander multipliziert und wieder zurück in den Zeitbereich transformiert.

$$\hat{\tilde{\underline{y}}}(l) = \mathbf{W}_y\, \mathbf{F}^{-1}\, \mathbf{X}(l)\, \hat{\underline{\tilde{G}}}(l) \tag{3a}$$

$$\tilde{\underline{q}}(l) = \tilde{\underline{m}}(l) - \hat{\tilde{\underline{y}}}(l). \tag{3b}$$

Dieses Prinzip drückt Gl. (3a) aus. Der geschätzte Raumimpulsantwortvektor $\hat{g}(l)$ setzt sich aus den Abtastwerten der geschätzten Raumimpulsantwort $\hat{g}(k,i)$ zusammen.

$$\hat{\underline{g}}(l) = [\hat{g}(l \cdot FR, 0), \ldots, \hat{g}(l \cdot FR, N - 1)]^T \tag{4}$$

Der Vektor $\hat{g}(l)$ wird statt mit dem Zeitindex $k$ mit dem Blockindex $l$ indiziert, da er sich nur alle $FR$ Abtastwerte ändert, und für $k = (l - 1) \cdot FR + 1 \ldots l \cdot FR$ konstant ist. Für eine korrekte Durchführung der schnellen Faltung muss der geschätzte Raumimpulsantwortvektor durch Nullen auf

$$\hat{\tilde{\underline{g}}}(l) = [\hat{g}(l \cdot FR, 0), \ldots, \hat{g}(l \cdot FR, N - 1), \underbrace{0, \ldots, 0}_{L-1}]^T \tag{5}$$

erweitert werden. Der Vektor $\hat{\underline{\tilde{G}}}(l)$ (**208**) in Gl. (3a) ist die diskrete Fourier-Transformierte von $\hat{\tilde{\underline{g}}}(l)$

$$\hat{\underline{\tilde{G}}}(l) = \mathbf{F}\, \hat{\tilde{\underline{g}}}(l). \tag{6}$$

Man erhält diesen Vektor direkt als Ergebnis aus der Adaptionsgleichung (10).

Die Matrix $\mathbf{X}(l)$ (**209**) ist eine Diagonalmatrix,

$$\mathbf{X}(l) = \mathrm{diag}\{\underline{X}(l)\} \tag{7}$$

deren Diagonalelemente die diskrete Fourier-Transformierte des Lautsprechersignalvektors

$$\underline{X}(l) = \mathbf{F}\, \underline{x}(l) \tag{8}$$

darstellen. Das Matrix-Vektor-Produkt $\mathbf{X}(l)\, \hat{\underline{\tilde{G}}}(l)$ drückt die elementweise Multiplikation (**216**) der Vektoren $\underline{X}(l)$ (**209**) und $\hat{\underline{\tilde{G}}}(l)$ (**208**) aus. Das Ergebnis dieses Produkts ist wieder ein Vektor im Frequenzbereich (**210**), der anschließend durch Multiplikation mit der Inversen DFT-Matrix in den Zeitbereich zurück transformiert wird. Die Multiplikation mit der Diagonalmatrix

$$\mathbf{W}_y = \mathrm{diag}\{[\underbrace{0, \dots, 0}_{N-1}, \underbrace{1, \dots, 1}_{L}]\} \tag{9}$$

(**219**) bewirkt, dass die ersten $N-1$ Elemente zu Null gesetzt werden. Dies ist Bestandteil der schnellen Faltung. Die Matrix $\mathbf{W}_y$ wird als Fenstermatrix bezeichnet. Der so erhaltene Vektor ist der geschätzte Echosignalvektor $\hat{\tilde{y}}(l)$ (**203**). Den Ausgangssignalvektor $\tilde{q}(l)$ (**202**) erhält man anschließend nach Gl. (3b) durch Subtraktion (**217**) von $\tilde{m}(l)$ (**201**) und $\tilde{q}(l)$ (**203**).

Die Anpassung des geschätzten Raumimpulsantwortvektors $\hat{g}(l)$ erfolgt mit Hilfe des Lautsprechersignalvektors $\underline{x}(l)$ (**211**) und des Ausgangssignalvektors $\tilde{q}(l)$ (**202**). Die Gleichung dafür lautet

$$\hat{\tilde{\underline{G}}}(l+1) = \hat{\tilde{\underline{G}}}(l) + \mathbf{F}\,\mathbf{W}_g\,\mathbf{F}^{-1}\,\boldsymbol{\mu}(l)\,\mathbf{X}^*(l)\,\tilde{\underline{Q}}(l), \tag{10}$$

Der Übertragungsfunktionsvektor $\hat{\tilde{\underline{G}}}(l+1)$ (**207**) für den nächsten Blockindex berechnet sich aus der Addition (**215**) des aktuellen Übertragungsfunktionsvektors $\hat{\tilde{\underline{G}}}(l)$ (**208**) mit dem Ergebnis der Adaptionsgleichung (**223**). Die Gleichung stellt eine schnelle Korrelation des Lautsprechersignalvektors $\underline{x}(l)$ (**211**) mit dem Ausgangssignalvektor $\tilde{q}(l)$ (**202**) dar. Das Prinzip ist der schnellen Faltung ähnlich. Der Unterschied besteht darin, dass die Multiplikation im Frequenzbereich(**213**) von $\tilde{\underline{Q}}(l)$ (**204**) mit dem konjugiert komplexen Lautsprechersignalvektor $\mathbf{X}^*(l)$ (**205**) erfolgt. Der konjugiert komplexe Lautsprechersignalvektor $\mathbf{X}^*(l)$ (**205**) ergibt sich nach Anwendung des konjugiert-komplex Operators (**212**) auf die Fourier-Transformierte $\mathbf{X}(l)$ des Lautsprechersignals. Der aktuelle Übertragungsfunktionsvektor $\hat{\tilde{\underline{G}}}(l)$ (**208**) ergibt sich durch Verzögerung (**218**) des Übertragungsfunktionsvektors für den nächsten Blockindex $\hat{\tilde{\underline{G}}}(l+1)$ (**207**).

Der Vektor $\tilde{\underline{Q}}(l)$ (**204**) ist die diskrete Fourier-Transformierte des Ausgangssignalvektors $\tilde{q}(l)$.

$$\tilde{\underline{Q}}(l) = \mathbf{F}\,\tilde{q}(l) \tag{11}$$

Die anschließende Multiplikation (**214**) mit der Diagonalmatrix

$$\boldsymbol{\mu}(l) = \mathrm{diag}\{\underline{\mu}(l)\} \tag{12}$$

(**206**) im Frequenzbereich steuert die Größe der Schrittweite bei der Adaption. Sie stellt ebenfalls eine elementweise Multiplikation dar. Der Vektor $\underline{\mu}(l)$ (**206**) ist der Schrittweitenvektor.

Die Berechnung des Schrittweitenvektors wird im folgenden Abschnitt beschrieben. Die Fenstermatrix

$$\mathbf{W}_g = \mathrm{diag}\{[\underbrace{1, \dots, 1}_{N}, \underbrace{0, \dots, 0}_{L-1}]\} \tag{13}$$

(**220**) in Gl. (10) bewirkt ein Nullsetzen der letzten $L-1$ Elemente des in den Zeitbereich zurück transformierten Vektors und stellt sicher, dass stets nur die ersten $N$ Elemente des geschätzten Raumimpulsantwortvektors $\hat{\tilde{g}}(l)$ ungleich Null sind. Dies gehört zum Algorithmus. Durch die erneute Transformation von $\hat{\tilde{g}}(l)$ in den Frequenzbereich kann das Ergebnis der Adaptionsgleichung (**223**) direkt in die Filtergleichung (3a) eingesetzt werden.

**Ein bekanntes Verfahren zur Schrittweitensteuerung** (Farhang-Boroujeny, B.: Adaptive Filters - Theory and Applications. Wiley & Sons, 1998.) berechnet die Schrittweite wie folgt:

$$\boldsymbol{\mu}(l) = \frac{\mu}{L}\left(\mathrm{diag}\{|\underline{X}(l)|^2\}\right)^{-1}. \tag{14}$$

Hierbei ist $\mu$ ein zu parametrisierender Schrittweitenfaktor und $\underline{X}(l)$ der Vektor der diskreten Fourier-transformierten des Lautsprechersignals aus Gl. (8).

Diese Art der Schrittweitensteuerung führt eine Dekorrelation des Lautsprechersignals durch. Damit wird der FBLMS-Algorithmus unabhängig gegenüber Korrelationen im Lautsprechersignal und erreicht so größere Adaptionsgeschwindigkeiten.

Der Nachteil des Verfahrens liegt in der unzureichenden Berücksichtigung von Störgeräuschen. Dies wird mit der optimalen Schrittweitensteuerung aus (Nitsch, B., H.: Adaptive Filter im Frequenzbereich für Freisprecheinrichtungen. Dissertation, TU Darmstadt, 2000.) behoben:

$$\mu(l) = \left( \mathbf{\Phi}_{xx}\, \mathbf{D}(l) + \frac{M}{L}\, \mathbf{\Phi}_{(n+s)(n+s)} \right)^{-1} \mathbf{D}(l). \tag{15}$$

Darin ist $\mathbf{D}(l)$ die Diagonalmatrix

$$\mathbf{D}(l) = \mathrm{diag}\{\underline{D}(l)\} \tag{16}$$

und $\Phi_{xx}$ und $\Phi_{(n+s)(n+s)}$ sind die beiden Diagonalmatrizen

$$\mathbf{\Phi}_{xx} = \mathrm{diag}\{\underline{\Phi}_{xx}\} \text{ und} \tag{17}$$

$$\mathbf{\Phi}_{(n+s)(n+s)} = \mathrm{diag}\{\underline{\Phi}_{(n+s)(n+s)}\}, \tag{18}$$

in denen $\underline{\Phi}_{xx}$ und $\underline{\Phi}_{(n+s)(n+s)}$ die Leistungsspektren zu den beiden Signalen $x(k)$ und $(n(k)+s(k))$ darstellen. Der Faktor $M/L$ in Gl. (15) normiert das Leistungsspektrum $\underline{\Phi}_{(n+s)(n+s)}$ auf das Leistungsspektrum $\underline{\Phi}_{xx}$. Der Vektor $\underline{D}(l)$ ist das Betragsquadrat des so genannten Übertragungsfunktionsabstandes und berechnet sich aus dem erweiterten Systemabstandsvektor

$$\underline{\tilde{v}}(l) = \underline{\tilde{g}}(l) - \underline{\hat{\tilde{g}}}(l), \tag{19}$$

welcher als die Differenz zwischen den erweiterten Vektoren der tatsächlichen und der geschätzten Raumimpulsantwort definiert wird. Der Vektor $\underline{\hat{\tilde{g}}}(l)$ wurde in Gl. (5) eingeführt. Der Vektor $\underline{\tilde{g}}(l)$ wird auf ähnliche Weise definiert:

$$\underline{\tilde{g}}(l) = [\bar{g}(l \cdot FR, 0), \dots, \bar{g}(l \cdot FR, N-1), \underbrace{0, \dots, 0}_{L-1}]^{T}. \tag{20}$$

Darin ist $\bar{g}(k,i)$ ein über das Zeitintervall $k = (l\text{-}1) \cdot FR+1...l \cdot FR$ gemittelter Wert der tatsächlichen Raumimpulsantwort. $\underline{D}(l)$ ist nun das Betragsquadrat des erweiterten Systemabstandsvektors im Frequenzbereich:

$$\underline{D}(l) = |\underline{\tilde{V}}(l)|^{2} \tag{21}$$

mit

$$\begin{aligned}
\underline{\tilde{V}}(l) &= \mathbf{F}\, \underline{\tilde{v}}(l) \\
&= \mathbf{F}\, \underline{\tilde{g}}(l) - \mathbf{F}\, \underline{\hat{\tilde{g}}}(l) \\
&= \underline{\tilde{G}}(l) - \underline{\hat{\tilde{G}}}(l).
\end{aligned} \tag{22}$$

$\underline{\tilde{V}}(l)$ wird auch als Übertragungsfunktionsabstandsvektor bezeichnet.

Gleichung (15) stellt den Ausgangspunkt der erfindungsgemäßen Schrittweitensteuerung dar. Sie wird für den praktischen Einsatz noch angepasst. Diese Anpassungen der Schrittweitensteuerung haben folgende Zielstellungen:

- eine Anpassung an reale Einsatzbedingungen
- eine Vereinfachung der Gleichung (15)
- eine Einführung eines Schrittweitenfaktors zur Optimierung ihrer Wirkungsweise unter realen Einsatzbedingungen.

Zur **Anpassung der Schrittweitensteuerung an reale Einsatzbedingungen** werden die Leistungsspektren $\hat{\underline{\Phi}}_{xx}(l)$ und $\hat{\underline{\Phi}}_{(n+s)(n+s)}(l)$ durch Kurzzeitleistungsspektren ersetzt:

$$\boldsymbol{\mu}(l) = \left( \hat{\mathbf{\Phi}}_{xx}(l)\, \mathbf{D}(l) + \frac{M}{L}\, \hat{\mathbf{\Phi}}_{(n+s)(n+s)}(l) \right)^{-1} \mathbf{D}(l) \tag{23}$$

mit

$$\hat{\mathbf{\Phi}}_{xx}(l) = \mathrm{diag}\{\hat{\underline{\Phi}}_{xx}(l)\}, \tag{24}$$

$$\hat{\mathbf{\Phi}}_{(n+s)(n+s)}(l) = \mathrm{diag}\{\hat{\underline{\Phi}}_{(n+s)(n+s)}(l)\}. \tag{25}$$

und

$$\hat{\underline{\Phi}}_{xx}(l) = \rho \cdot \hat{\underline{\Phi}}_{xx}(l-1) + (1-\rho) \cdot |\underline{X}(l)|^2, \tag{26}$$

$$\hat{\underline{\Phi}}_{(n+s)(n+s)}(l) = \rho \cdot \hat{\underline{\Phi}}_{(n+s)(n+s)}(l-1) + (1-\rho) \cdot |\underline{\tilde{N}}(l) + \underline{\tilde{S}}(l)|^2. \tag{27}$$

$\underline{X}(l)$, $\underline{\tilde{N}}(l)$ und $\underline{\tilde{S}}(l)$ sind die diskreten Fourier-Transformierten des Lautsprechersignalvektors $x(l)$, des Störgeräuschsignalvektors $\tilde{n}(l)$ und des Sprachsignalvektors des nahen Sprechers $\tilde{s}(l)$ und berechnen sich adäquat zu Gleichung (11).
Als nächstes wird Gl. (23) **vereinfacht.** Dafür wird der Zusammenhang

$$\hat{\mathbf{\Phi}}_{ee}(l) = \frac{L}{M}\, \mathbf{D}(l)\, \hat{\mathbf{\Phi}}_{xx}(l) \tag{28}$$

ausgenutzt.
$\hat{\mathbf{\Phi}}_{ee}(l)$ ist die Diagonalmatrix

$$\hat{\mathbf{\Phi}}_{ee}(l) = \mathrm{diag}\{\hat{\underline{\Phi}}_{ee}(l)\} \tag{29}$$

zum Kurzzeitleistungsspektrum des Restechosignal $e(k)$

$$\hat{\underline{\Phi}}_{ee}(l) = \rho \cdot \hat{\underline{\Phi}}_{ee}(l-1) + (1-\rho) \cdot |\underline{\tilde{E}}(l)|^2 \tag{30}$$

$$\underline{\tilde{E}}(l) = \mathbf{F}\, \underline{\tilde{e}}(l) \tag{31}$$

Der Restechosignalvektor $\underline{\tilde{e}}(l)$ ist die Differenz aus realem $\underline{\tilde{y}}(l)$ und geschätztem Echosignalvektor $\hat{\underline{\tilde{y}}}(l)$:

$$\underline{\tilde{e}}(l) = \underline{\tilde{y}}(l) - \hat{\underline{\tilde{y}}}(l), \tag{32}$$

Stellt man Gl. (28) nach $\hat{\mathbf{\Phi}}_{xx}(l)\mathbf{D}(l)$ um und setzt dies in Gl. (23) ein, erhält man

$$\mu(l) = \left(\frac{M}{L}\,\hat{\Phi}_{ee}(l) + \frac{M}{L}\,\hat{\Phi}_{(n+s)(n+s)}(l)\right)^{-1} \mathbf{D}(l)$$
$$= \frac{L}{M}\left(\hat{\Phi}_{ee}(l) + \hat{\Phi}_{(n+s)(n+s)}(l)\right)^{-1}\mathbf{D}(l). \tag{33}$$

Dann lässt sich noch der Klammerausdruck vereinfachen. Bei den Diagonalelementen der Matrizen $\hat{\Phi}_{ee}(l)$ und $\hat{\Phi}_{(n+s)(n+s)}(l)$ handelt es sich um Kurzzeitleistungsspektren zu den beiden Signalen $e(k)$ und $(n(k)+s(k))$. Diese beiden Signale sind nicht miteinander korreliert. Damit entspricht die Summe der beiden Kurzzeitleistungsspektren annähernd dem Kurzzeitleistungsspektrum der Summe beider Signale. Das Signal $(e(k) + n(k) + s(k))$ ist das Ausgangssignal der Echokompensation $q(k)$ (siehe Fig. 1), weshalb folgt:

$$\hat{\Phi}_{ee}(l) + \hat{\Phi}_{(n+s)(n+s)}(l) = \hat{\Phi}_{qq}(l) \tag{34}$$

mit

$$\hat{\Phi}_{qq}(l) = \mathrm{diag}\{\underline{\hat{\Phi}}_{qq}(l)\}, \tag{35}$$

$$\underline{\hat{\Phi}}_{qq}(l) = \rho \cdot \underline{\hat{\Phi}}_{qq}(l-1) + (1-\rho) \cdot |\tilde{\underline{Q}}(l)|^2. \tag{36}$$

Der Vektor $\tilde{\underline{Q}}(l)$ wurde in Gl. (11) eingeführt. Die vereinfachte erfindungsgemäße Schrittweitensteuerung lautet damit

$$\mu(l) = \frac{L}{M}\left(\hat{\Phi}_{qq}(l)\right)^{-1}\mathbf{D}(l). \tag{37}$$

Simulationen haben gezeigt, dass sich die Echodämpfung im adaptierten Zustand noch verbessern lässt, wenn man in Gl. (37) einen Schrittweitenfaktor $\mu < 1$ einführt:

$$\mu(l) = \mu\,\frac{L}{M}\left(\hat{\Phi}_{qq}(l)\right)^{-1}\mathbf{D}(l). \tag{38}$$

Das Betragsquadrat des Übertragungsfunktionsabstandes $\mathbf{D}(l)$ ist im praktischen Einsatz nicht direkt zugänglich, es wurde daher ein Verfahren zur näherungsweisen Berechnung von $\underline{D}(l)$ entwickelt.

Die **Grundlage für die Berechnung des Betragsquadrates des Übertragungsfunktionsabstandes $\mathbf{D}(l)$** bildet die Beziehung

$$\mathbf{D}(l) = \frac{M}{L}\left(\hat{\Phi}_{xx}(l)\right)^{-1}\hat{\Phi}_{ee}(l), \tag{39}$$

welche man durch Umstellen der Gl. (28) erhält. Die Matrix $\hat{\Phi}_{xx}(l)$ kann über die Gln. (8), (26) und (24) direkt aus dem Eingangssignalvektor $\underline{x}(l)$ berechnet werden. Der Restechosignalvektor $\tilde{\underline{e}}(l)$ zur Berechnung der Matrix $\hat{\Phi}_{ee}(l)$ ist jedoch nicht direkt zugänglich. $\hat{\Phi}_{ee}(l)$ wird daher mit Hilfe der spektralen Subtraktion indirekt über das Kurzzeitleistungsspektrum des Ausgangssignals der Echokompensation, in dem das Restechosignal enthalten ist, mit den Kurzzeitleistungsspektren $\hat{\underline{\Phi}}_{nn}(l)$ und $\hat{\underline{\Phi}}_{ss}(l)$ berechnet:

$$\hat{\Phi}_{ee}(l) = \hat{\Phi}_{qq}(l) - \hat{\Phi}_{nn}(l) - \hat{\Phi}_{ss}(l) \tag{40}$$

mit

$$\hat{\mathbf{\Phi}}_{nn}(l) = \mathrm{diag}\{\hat{\underline{\Phi}}_{nn}(l)\}, \tag{41}$$

$$\hat{\mathbf{\Phi}}_{ss}(l) = \mathrm{diag}\{\hat{\underline{\Phi}}_{ss}(l)\} \tag{42}$$

Die Matrix $\hat{\mathbf{\Phi}}_{qq}(l)$ wird bereits für die Berechnung der Schrittweite benötigt (vgl. Gl. (38)). Das Kurzzeitleistungsspektrum des Rauschsignals $\hat{\underline{\Phi}}_{nn}(l)$ wird während der Geräuschreduktion berechnet und kann nach entsprechender Normierung von dort übernommen werden. Das Kurzzeitleistungsspektrum des Sprachsignals lässt sich nicht berechnen. Stattdessen kann man aber die Tatsache ausnutzen, dass erstens das Sprachsignal nur zeitweise auftritt und zweitens dessen Kurzzeitleistungsspektrum nur positive Werte annehmen kann. Damit lässt sich Gl. (40) folgendermaßen abschätzen:

$$\hat{\mathbf{\Phi}}_{ee}(l) \le \hat{\mathbf{\Phi}}_{qq}(l) - \hat{\mathbf{\Phi}}_{nn}(l) \tag{43}$$

Die Gleichheit tritt immer dann ein, wenn kein Sprachsignal anliegt. Setzt man diese Ungleichung in Gl. (39) ein, so erhält man für die Matrix $\mathbf{D}(l)$ die Abschätzung

$$\mathbf{D}(l) \le \frac{M}{L} \left( \hat{\mathbf{\Phi}}_{xx}(l) \right)^{-1} \left( \hat{\mathbf{\Phi}}_{qq}(l) - \hat{\mathbf{\Phi}}_{nn}(l) \right). \tag{44}$$

Damit lässt sich eine obere Schranke für die Matrix $\mathbf{D}(l)$ angeben. Eine weitere obere Schranke ergibt sich aus der Feststellung, dass sich der Betrag des Übertragungsfunktionsabstandes während der Adaption nicht vergrößert. Dafür wird zunächst angenommen, dass sich die tatsächliche Raumimpulsantwort nicht ändert:

$$\mathbf{D}(l) \le \mathbf{D}(l - 1). \tag{45}$$

Eine Anpassung der Schrittweitensteuerung an Raumänderungen erfolgt im nächsten Abschnitt. Mit diesen beiden Abschätzungen wird nun die folgende Minimum-Regel zur Schätzung von $\mathbf{D}(l)$ angewendet:

$$\mathbf{D}(l) = \min \left( \mathbf{D}(l-1), \frac{M}{L} \left( \hat{\mathbf{\Phi}}_{xx}(l) \right)^{-1} \left( \hat{\mathbf{\Phi}}_{qq}(l) - \hat{\mathbf{\Phi}}_{nn}(l) \right) \right). \tag{46}$$

Während Sprachpausen erfolgt stets eine genaue Bestimmung von $\mathbf{D}(l)$. In Gegensprechsituationen wird $\mathbf{D}(l)$ dagegen durch $\mathbf{D}(l\text{-}1)$ bestimmt. Damit stellt Gl. (46) eine robuste Gegensprechdetektion dar. Die Berechnung des Kurzzeitleistungsspektrums $\hat{\underline{\Phi}}_{ss}(l)$ ist dafür nicht notwendig.

Die spektrale Subtraktion in Gl. (46) bringt jedoch auch in Sprachpausen noch eine prinzipbedingte Ungenauigkeit bei der Berechnung von $\hat{\mathbf{\Phi}}_{ee}(l)$ mit sich. Insbesondere bei sehr kleinen Restechosignalpegeln im Vergleich zum Rauschsignalpegel wird die Bestimmung des Kurzzeitleistungsspektrums des Restechosignals zu ungenau. Dies ist ein grundsätzliches Problem der spektralen Subtraktion. Um Gl. (46) an dieses Problem anzupassen, wird eine Fallunterscheidung getroffen. Bei großem Restechosignalpegel erfolgt die Schätzung nach Gl. (46), bei kleinen Pegeln wird statt der Ungleichung (43) die Abschätzung

$$\hat{\mathbf{\Phi}}_{ee}(l) \le (\alpha - 1) \cdot \hat{\mathbf{\Phi}}_{nn}(l) \tag{47}$$

herangezogen, womit die Gleichung zur Bestimmung von $\mathbf{D}(l)$ nun

$$\mathbf{D}(l) = \min \left( \mathbf{D}(l-1), \frac{M}{L} \left( \hat{\mathbf{\Phi}}_{xx}(l) \right)^{-1} (\alpha - 1) \hat{\mathbf{\Phi}}_{nn}(l) \right) \tag{48}$$

lautet.

Die Fallunterscheidung erfolgt jedoch nicht für den gesamten Vektor $\underline{D}(l)$ sondern frequenzabhängig. Deshalb lautet die endgültige, erfindungsgemäße Gleichung zur Schätzung des Betrages des Übertragungsfunktionsabstandes

$$\underline{D}'(l,i) = \frac{M}{L}\frac{1}{\hat{\underline{\Phi}}_{xx}(l,i)} \cdot \begin{cases} \hat{\underline{\Phi}}_{qq}(l,i) - \hat{\underline{\Phi}}_{nn}(l,i) & \hat{\underline{\Phi}}_{qq}(l,i) \geq \alpha \cdot \hat{\underline{\Phi}}_{nn}(l,i) \\ (\alpha - 1)\hat{\underline{\Phi}}_{nn}(l,i) & \hat{\underline{\Phi}}_{qq}(l,i) < \alpha \cdot \hat{\underline{\Phi}}_{nn}(l,i) \end{cases} \tag{49a}$$

$$\underline{D}(l) = \min\left(\underline{D}(l-1), \underline{D}'(l)\right). \tag{49b}$$

Die Innovation der Berechnung von $\underline{D}(l)$ besteht in der erstmaligen Berücksichtigung des Verhältnisses zwischen $\hat{\underline{\Phi}}_{qq}(l)$ und $\hat{\underline{\Phi}}_{nn}(l)$ und in der Minimumbildung zur Schätzung des Systemabstandes $\underline{D}(l)$ aus dem vorangegangenen und dem aktuellen Wert.

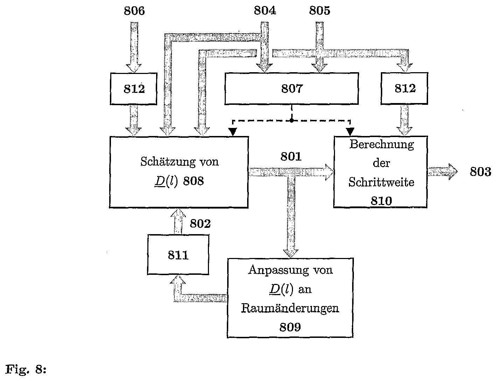

Die **Funktionsweise des erfindungsgemäßen Verfahrens zur Schrittweitensteuerung** ist in Fig. 8 zu einem Blockschaltbild zusammengefasst. Der gesuchte Schrittweitenvektor $\underline{\mu}(l)$, (**803**), wird nach folgender Gleichung berechnet (**810**):

$$\underline{\mu}(l,i) = \begin{cases} \mu_1 \cdot L/M \cdot \underline{D}(l,i)/\hat{\underline{\Phi}}_{qq}(l,i) & \hat{\underline{\Phi}}_{qq}(l,i) \geq \alpha \cdot \hat{\underline{\Phi}}_{nn}(l,i) \\ \mu_2 \cdot L/M \cdot \underline{D}(l,i)/\hat{\underline{\Phi}}_{qq}(l,i) & \hat{\underline{\Phi}}_{qq}(l,i) < \alpha \cdot \hat{\underline{\Phi}}_{nn}(l,i). \end{cases} \tag{50}$$

Hierbei ist $\underline{D}(l)$ (**801**) das geschätzte Betragsquadrat des Übertragungsfunktionsabstandes $\tilde{V}(l)$ (vgl. Gln. (19), (21) und (22)). $\hat{\underline{\Phi}}_{qq}(l)$ (**805**) ist das Kurzzeitleistungsspektrum zum Ausgangssignal der Echokompensation $q(k)$ und geht nach Durchlaufen einer Inversionsstufe (**812**) in die Berechnung der Schrittweite (**810**) ein. Die Berechnung von $\hat{\underline{\Phi}}_{qq}(l)$ (**805**) erfolgt durch gemittelte Periodogramme nach Gleichung (56). Die Größe des Schrittweitenfaktors $\mu$ wird frequenzabhängig durch das Verhältnis zwischen dem Kurzzeitleistungsspektrum des Ausgangssignals $\hat{\underline{\Phi}}_{qq}(l)$ (**805**) und dem Kurzzeitleistungsspektrum des Hintergrundrauschens $\hat{\underline{\Phi}}_{nn}(l)$ (**804**) gesteuert. Dazu erfolgt vor der eigentlichen Berechnung und vor Verwendung der unterschiedlichen Schrittweitenfaktoren $\mu_1$ oder $\mu_2$ eine Fallunterscheidung (**807**) zum Verhältnis zwischen $\hat{\underline{\Phi}}_{qq}(l, i)$ und $\hat{\underline{\Phi}}_{nn}(l, i)$. $\hat{\underline{\Phi}}_{nn}(l)$ erhält man aus dem Geräuschredulctionsalgorithmus.

In die Schätzung (**808**) von $\underline{D}(l)$ (**801**) geht rekursiv der im vorhergehenden Iterationsschritt berechnete und in einem Verzögerungsschritt (**811**) verzögerte Vektor $\underline{D}(l - 1)$ (**802**) ein. Durch die Minimum-Bildung in Gleichung (49) wurde angenommen, dass sich die tatsächliche Raumimpulsantwort nicht ändert und sich der Betrag des Übertragungsfunktionsabstandes deshalb nicht mehr vergrößert. Unter realen Bedingungen ist es aber möglich, dass sich die Raumimpulsantwort ändert. Um diesen Umstand zu berücksichtigen, wird der Vektor $\underline{D}(l)$ nach jedem Iterationsschritt um einen bestimmten Betrag erhöht (Gln. (51), (**809**)). Damit wird verhindert, dass der Vektor $\underline{D}(l)$, nachdem er ein Minimum erreicht hat, nicht mehr angepasst wird.

$$\underline{D}(l,i) = \underline{D}(l,i) + konst. \tag{51}$$

Im folgenden Abschnitt soll noch eine anschauliche Erläuterung der erfindungsgemäßen Schrittweitensteuerung und Abgrenzung zu bekannten Verfahren erfolgen. Stellt man Gl. (28) nach **D**($l$) um und setzt dies in Gl. (38) ein, so erhält man die Schrittweitensteuerung in der Form

$$\underline{\mu}(l) = \mu \left(\hat{\Phi}_{xx}(l)\right)^{-1} \left(\hat{\Phi}_{qq}(l)\right)^{-1} \hat{\Phi}_{ee}(l). \tag{52}$$

In dieser Form werden nun die Parallelen zu der Schrittweitensteuerung aus Gl. (14) deutlich. Der erste Teil stimmt nahezu mit Gl. (14) überein. Der Schrittweitenfaktor $\mu/L$ aus Gl. (14) lautet in Gl. (52) $\mu$. Und in Gl. (52) wird zur Berechnung von $\hat{\Phi}_{xx}(l)$ anstatt des Betragsquadrates $|\underline{X}(l)|^2$ wie in Gl. (14) der gleitende Mittelwert dieses Betragsquadrates verwendet (siehe Gln. (26) und (24)).

Die wesentliche Erweiterung zur Schrittweitensteuerung von Gl. (14) stellt der Ausdruck $(\hat{\Phi}_{qq}(l))^{-1} \hat{\Phi}_{ee}(l)$ dar. Dieser Ausdruck bildet eine Diagonalmatrix, deren Diagonalelemente sich aus dem Verhältnis zwischen den Koeffizienten der beiden Vektoren $\hat{\underline{\Phi}}_{ee}(l)$ und $\hat{\underline{\Phi}}_{qq}(l)$ zusammensetzen. Das heißt, bei der verbesserten Schrittweitensteuerung wird zusätzlich noch das Verhältnis zwischen der Signalleistung des Restechosignals $e(k)$ und der Signalleistung des Ausgangssignals der Echokompensation $q(k)$ in Abhängigkeit von der Frequenz berücksichtigt. Ist das Restechosignal von starken Störgeräuschen überlagert, ist dieser Quotient sehr klein. Dies hat zur Folge, dass die Schrittweite verringert wird und sich die Schätzung der Raumimpulsantwort nicht wieder verschlechtert. Bei geringen Störsignalpegeln wird die Schrittweite deutlich größer, wodurch eine schnelle Adaption erreicht wird. Außerdem wird durch diese Schrittweitensteuerung auch der Grad der Adaption berücksichtigt. Stimmt die geschätzte Raumimpulsantwort bereits sehr gut mit der tatsächlichen Raumimpulsantwort überein ist die Restechosignalleistung gegenüber der Störsignalleistung gering und die Schrittweite ist kleiner als zu Beginn der Adaption.

Im praktischen Einsatz ist der gewählte Ansatz zur Kompensation akustischer Echos (siehe Fig. 2) nicht in der Lage, das Echosignal komplett zu entfernen. Es bleibt stets ein leichtes **Restechosignal** $e(k)$ vorhanden. Die Gründe dafür sind unter anderem im Algorithmus zu finden. So wird durch die endliche Länge der Impulsantwort des Echokompensationsfilters nicht die komplette Raumimpulsantwort nachgebildet. Durch Störgeräusche wird die Kompensation außerdem verschlechtert.

Eine Möglichkeit, die akustische Echokompensation weiter zu verbessern, besteht darin, die akustische Echokompensation am Ausgang um ein geeignetes Filter zur nachträglichen Dämpfung des Restechosignals zu erweitern. Hierfür sind jedoch Informationen über das verbleibende Restechosignal notwendig. Ein Vorteil der erfindungsgemäßen Schrittweitensteuerung besteht darin, dass diese Informationen aus Zwischenergebnissen der Schrittweitensteuerung in Form eines Kurzzeitleistungsspektrums des Restechosignals gewonnen werden können. Hierfür kann Gl. (28)

$$\hat{\Phi}_{ee}(l) = \frac{L}{M} \mathbf{D}(l)\, \hat{\Phi}_{xx}(l) \tag{53}$$

herangezogen werden, mit der sich das Kurzzeitleistungsspektrum des Restechosignals aus dem berechneten Betragsquadrat des Übertragungsfunktionsabstandes $\mathbf{D}(l)$ und dem Kurzzeitleistungsspektrum des Lautsprechersignals $\hat{\Phi}_{xx}(l)$ berechnen lässt.

In einer günstigen Ausführungsform der Erfindung kann ein System zur akustischen Echokompensation und anschließenden Restecho- und Störgeräuschunterdrückung wie folgt realisiert werden (siehe Fig. 4).

Die Eingangssignale für das Filter zur Echokompensation sind das Lautsprechersignal $x(k)$ (**404**), sowie das Mikrofonsignal $m(k)$ (**402**). Das Ausgangssignal des Echokompensationsfilters $q(k) = s(k) + n(k) + e(k)$ (**403**) ist gleichzeitig das Eingangssignal des Restechoreduktionsfilters. Dessen Ausgangssignal durchläuft das Störgeräuschunterdrückungsfilter und wird dort um die geschätzten Störgeräuscheinflüsse bereinigt. Das Ausgangssignal des Störgeräuschunterdrückungsfilters $c(k)$ (**401**) entspricht im Idealfall dem um alle Störeinflüsse bereinigten Sprachsignal des nahen Sprechers.

Die **Störgeräuschreduktion** arbeitet nach dem Optimalfilter-Prinzip. Das bedeutet, das Rauschsignal $n(k)$ im Eingangssignal $q(k)$ wird durch ein signalabhängiges Filter, mit dem das Signal $q(k)$ gefiltert wird, gedämpft. Die Dämpfung des Filters bei einer bestimmten Frequenz ist umso größer je kleiner die Leistungsdichte des Sprachsignals $s(k)$ gegenüber der des Rauschsignals $n(k)$ bei dieser Frequenz ist. So werden nur die Spektralanteile gedämpft, in denen die Leistungsdichte des Sprachsignals gering ist. Das Geräuschreduktionsfilter ist ein FIR-Filter. Dessen Impulsantwort wird mit $h(k, i)$ bezeichnet. Da die Filterkoeffizienten stets an die momentanen Signaleigenschaften angepasst werden, ist das Filter zeitveränderlich und hängt deshalb wie auch das Echokompensationsfilter vom Zeitindex $k$ ab. Die Schwierigkeit bei der Geräuschreduktion besteht darin, die Leistungsdichte von Sprachsignal und Rauschsignal zu bestimmen, denn dafür steht nur das Signal $q(k)$ zur Verfügung. Nutzt man jedoch die Eigenschaft des Rauschsignals aus, dass es sich über einen längeren Zeitraum stationär verhält, kann man unter dieser Annahme das Rauschleistungsdichtespektrum aus dem Signal $q(k)$ ermitteln. Das Leistungsdichtespektrum des Sprachsignals $s(k)$ wird durch spektrale Subtraktion berechnet.

Das **Filter zur Reduktion des Restechos** (siehe Fig. 5) arbeitet nach dem gleichen Prinzip wie die Geräuschreduktion. Mit einem linearen Filter wird durch frequenzabhängige Dämpfung des Ausgangssignals der Echokompensation $q(k)$ (**501**) die Energie des Restechosignals $e(k)$ verringert. Dieser Ansatz wird z. B. in (Gustafsson, P.; Jax, P.; Kamphausen, A.; Vary, P.: A postfilter for echo and noise reduction avoiding the problem of musical tones, ICASSP 1999.) und (Enzner, G.: Hands-Free Communication: A unified concept of acoustic echo cancellation and residual echo suppression. DAGA 2003, pp. 744-745) vorgeschlagen. Das in $q(k)$ enthaltene Sprachsignal $s(k)$ wird dadurch ebenfalls teilweise gedämpft, wenn sich Spektralanteile des Restechosignals und des Sprachsignals im gleichen Frequenzbereich befinden, was sich in der Regel nicht vermeiden läßt. Anders als bei der Echokompensation wird beim Restechoreduktionsfilter demnach das Sprachsignal verzerrt.

Die Dämpfung erfolgt zeit- und frequenzabhängig und wird stets an die momentane Energieverteilung im Restecho- und Sprachsignal angepasst. Der hier verwendete Ansatz zur Berechnung der Übertragungsfunktion des Filters ist der Optimalfilteransatz. Dieser Ansatz wird bereits bei der Geräuschreduktion verwendet. Ist $\hat{\Phi}_{ee}(e^{j\Omega})$ das Kurzzeitleistungsdichtespektrum des Restechosignals und $\hat{\Phi}_{ss}(e^{j\Omega})$ das Kurzzeitleistungsdichtespektrum des Sprach-

signals, dann lautet die Übertragungsfunktion des Filters nach dem Optimalfilteransatz:

$$H(e^{j\Omega}) = \frac{\hat{\Phi}_{ss}(e^{j\Omega})}{\hat{\Phi}_{ss}(e^{j\Omega}) + \hat{\Phi}_{ee}(e^{j\Omega})} \tag{54}$$

Das Kurzzeitleistungsdichtespektrum des Restechosignals $\hat{\Phi}_{ee}(e^{j\Omega})$ (**502**) lässt sich aus dem erfindungsgemäßen Echokompensationsalgorithmus ableiten. Das Kurzzeitleistungsdichtespektrum des Sprachsignals $\hat{\Phi}_{ss}(e^{j\Omega})$ muss dagegen aus dem Signal $q(k)$ durch spektrale Subtraktion gewonnen werden (siehe Gleichung (62)).

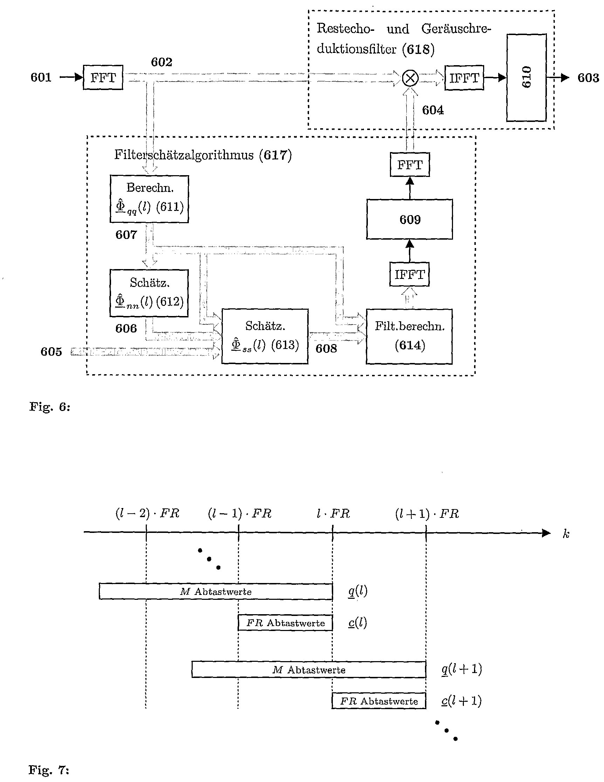

Die beiden Ansätze zur Reduktion des Restechos und der Hintergrundgeräusche sind in ihrem Aufbau identisch (vgl. Fig. 5). Sie unterscheiden sich nur in der Art und Weise, wie die Filterübertragungsfunktion ermittelt wird. **Beide Filter lassen sich somit zu einem Filter zusammenfassen.** Es muss lediglich der Filterschätzalgorithmus angepasst werden. Das Blockschaltbild des erfindungsgemäßen, kombinierten Systems zeigt Fig. 6.

Die Verarbeitung der Signale erfolgt blockweise wie bei der Echokompensation (siehe Seiten 2ff und Fig. 7). Die Framerate wird mit *FR* bezeichnet, *M* ist die Anzahl der FFT-Koeffizienten. *N = M - FR + 1* ist die Anzahl der Filterkoeffizienten des Filters. Der Eingangssignalblock $\underline{q}(l)$ (**502**) setzt sich wie folgt aus den Abtastwerten des Signals *q(k)* zusammen

$$\underline{q}(l) = [q(l \cdot FR - M + 1), \ldots, q(l \cdot FR)]^T. \tag{55}$$

Dabei ist zu beachten, dass der Vektor $\underline{q}(l)$ nicht mit dem gleichnamigen Vektor der Echokompensation übereinstimmt. Die einzelnen Komponenten des Restecho und Geräuschreduktionsalgorithmus' werden im Folgenden erläutert.

Das **Kurzzeitleistungsspektrum des Eingangssignals** $\hat{\underline{\Phi}}_{qq}(l)$ (**607**) wird über gemittelte Periodogramme aus dem Ausgangssignal der Echokompensation $\underline{q}(l)$ (**601**), welches zuvor mittels FFT in den Frequenzbereich transformiert wurde, berechnet (**611**):

$$\hat{\underline{\Phi}}_{qq}(l) = \rho \cdot \hat{\underline{\Phi}}_{qq}(l-1) + (1-\rho) \cdot |\underline{Q}(l)|^2 \tag{56}$$

mit

$$\underline{Q}(l) = \mathbf{F} \cdot \underline{q}(l). \tag{57}$$

*Q(l)* (**602**) ist die diskrete Fourier-Transformierte von $\underline{q}(l)$ (**601**).

Das **Kurzzeitleistungsspektrum des Rauschsignals** $\hat{\underline{\Phi}}_{nn}(l)$ (**612**) wird mit folgender Gleichung geschätzt:

$$\hat{\underline{\Phi}}_{nn}(l) = \min\left(\hat{\underline{\Phi}}_{nn}(l-1), \alpha \cdot \hat{\underline{\Phi}}_{qq}(l)\right). \tag{58}$$

Um zu vermeiden, dass das berechnete Rauschleistungsspektrum $\hat{\underline{\Phi}}_{nn}(l)$ (**606**) bei einem Minimumwert stehen bleibt, wird alle $\tau_n \cdot f_A$ Abtastwerte das geschätzte Rauschleistungsspektrum um einen Faktor $\gamma$ erhöht

$$\hat{\underline{\Phi}}_{nn}(l) = \gamma \cdot \hat{\underline{\Phi}}_{nn}(l). \tag{59}$$

Die Werte $\tau_n$ und $\gamma$ sind hierbei entsprechend zu dimensionierende Algorithmusparameter.

Die Berechnung des **Sprachleistungsspektrums (613)** erfolgt durch spektrale Subtraktion. Allerdings wird hier neben dem Rauschsignal *n(k)* auch das Restechosignal *e(k)* berücksichtigt. Da die drei Signale *n(k)*, *e(k)* und *s(k)*, aus denen sich das Signal *q(k)* zusammensetzt, nicht miteinander korreliert sind, entspricht das Kurzzeitleistungsspektrum von *q(k)* annähernd der Summe der Kurzzeitleistungsspektren von *n(k)*, *e(k)* und *s(k)* (vgl. Hoffmann, R.: Signalanalyse und -erkennung. Springer, 1998; Manolakis, D., G.; Ingle, V., K.; Kogon, S., M.: Statistical and adaptive signal processing. McGraw-Hill, 2000). Es gilt die Beziehung

$$\hat{\underline{\Phi}}_{qq}(l) = \hat{\underline{\Phi}}_{nn}(l) + \hat{\underline{\Phi}}_{ee}(l) + \hat{\underline{\Phi}}_{ss}(l), \tag{60}$$

wobei $\hat{\underline{\Phi}}_{ee}(l)$ **(605)** und $\hat{\underline{\Phi}}_{ss}(l)$ **(608)** die Kurzzeitleistungsspektren des Restechosignals und des Sprachsignals sind. $\hat{\underline{\Phi}}_{qq}(l)$ **(607)** wurde bereits weiter oben errechnet. $\hat{\underline{\Phi}}_{ee}(l)$ erhält man aus Gl. (53). Durch Umstellen dieser Beziehung erhält man die spektrale Subtraktionsregel

$$\hat{\underline{\Phi}}_{ss}(l) = \hat{\underline{\Phi}}_{qq}(l) - \hat{\underline{\Phi}}_{nn}(l) - \hat{\underline{\Phi}}_{ee}(l). \tag{61}$$

Da diese Subtraktionsregel noch zu erheblichen Fehlschätzungen führt, wenn die Leistung des Sprachsignals gegenüber der Leistung des Rauschsignals und des Restechosignals sehr gering ist, wurde die erfindungsgemäße Subtraktionsregel durch die Einführung eines Faktors $\alpha$ angepasst, um Fehlschätzungen des Sprachsignalleistungsspektrums zu verringern. Die angepasste Subtraktionsregel, welche auch das Restechosignal berücksichtigt, lautet damit:

$$\hat{\underline{\Phi}}_{ss}(l) = \max\left(0, \hat{\underline{\Phi}}_{qq}(l) - \alpha \cdot \left(\hat{\underline{\Phi}}_{nn}(l) + \hat{\underline{\Phi}}_{ee}(l)\right)\right). \tag{62}$$

Der Maximumwert ist dabei für jeden Frequenzwert des Sprachleistungsspektrums einzeln zu bilden.
Die **Übertragungsfunktion des erfindungsgemäßen, kombinierten Restecho- und Geräuschreduktionsfilters (614)** lautet nach dem Optimalfilteransatz in der hier verwendeten Notation

$$\underline{H}(l) = \left(\hat{\Phi}_{qq}(l)\right)^{-1} \hat{\underline{\Phi}}_{ss}(l) \tag{63}$$

mit

$$\hat{\Phi}_{qq}(l) = \mathrm{diag}\{\hat{\underline{\Phi}}_{qq}(l)\}. \tag{64}$$

Die Koeffizienten der Filterübertragungsfunktion setzen sich damit aus den Quotienten der Koeffizienten von $\hat{\underline{\Phi}}_{ss}(l)$ und $\hat{\underline{\Phi}}_{qq}(l)$ zusammen. Um zu große Verzerrungen des Sprachsignals zu vermeiden, wurde die Dämpfung durch einen Faktor $\beta$ begrenzt. Die angepasste Berechnungsgleichung für die Filterübertragungsfunktion **(614)** lautet damit

$$\underline{H}(l) = \beta + (1 - \beta) \cdot \left(\hat{\Phi}_{qq}(l)\right)^{-1} \hat{\underline{\Phi}}_{ss}(l). \tag{65}$$

Zur **Berechnung des Ausgangssignals des Filterschätzalgorithmus'** $\tilde{H}(l)$ **(604)** wird das Filter als linearphasiges FIR-Filter realisiert. Die Übertragungsfunktion $\underline{H}(l)$ **(615)** ist die diskrete Fourier-Transformierte der Filterimpulsantwort. Die Umsetzung des Filters erfolgt durch die schnelle Faltung nach der Overlap-Save-Methode. Dafür ist es notwendig, dass einige Koeffizienten der Filterimpulsantwort zu Null gesetzt werden. Die Filterübertragungsfunktion $\underline{H}(l)$ **(615)** wird deshalb in den Zeitbereich transformiert, mit einem Fenster multipliziert **(609)** und wieder zurück in den Frequenzbereich transformiert. Dies lässt sich durch die Gleichung

$$\underline{\tilde{H}}(l) = \mathbf{F}\,\mathbf{W}_h\,\mathbf{F}^{-1}\,\underline{H}(l) \tag{66}$$

ausdrücken. Die Matrix $\mathbf{W}_h$ ist die Fenstermatrix

$$\mathbf{W}_h = \mathrm{diag}\{\underline{w}_h\} \tag{67}$$

mit

$$\underline{w}_h(i) = \begin{cases} 0.54 - 0.46 \cos(2\pi i/N) & i = 0 \ldots (N-1)/2 \\ 0 & i = (N+1)/2 \ldots M - (N+1)/2 \\ 0.54 - 0.46 \cos(2\pi(i-M)/N) & i = M - (N-1)/2 \ldots M - 1 \end{cases} \tag{68}$$

Das verwendete Fenster ist ein Hamming-Fenster.

Die **Filterung** (**618**) erfolgt nun durch elementweise Multiplikation (**616**) von $\underline{Q}(l)$ (**602**) und $\underline{\tilde{H}}(l)$ (**604**) und anschließende Rücktransformation in den Zeitbereich:

$$\underline{\tilde{\tilde{c}}}(l) = \mathbf{W}_c \mathbf{F}^{-1} \mathbf{Q}(l) \underline{\tilde{\tilde{H}}}(l) \tag{69}$$

mit

$$\mathbf{Q}(l) = \mathrm{diag}\{\underline{Q}(l)\}. \tag{70}$$

Die Multiplikation mit der Fenstermatrix

$$\mathbf{W}_c = \mathrm{diag}\{[\underbrace{0, \ldots, 0}_{(N-1)/2}, \underbrace{1, \ldots, 1}_{FR}, \underbrace{0, \ldots, 0}_{(N-1)/2}]\} \tag{71}$$

(**610**) bewirkt, dass die ersten und letzten ($N$ - 1)/2 Elemente zu Null gesetzt werden. Dies ist Bestandteil der schnellen Faltung. Der Ausgangssignalvektor $\underline{\tilde{c}}(l)$ (**603**) besteht somit aus dem Vektor

$$\underline{c}(l) = [\underline{\tilde{c}}(l, (N-1)/2), \ldots, \underline{\tilde{c}}(l, M-1-(N-1)/2)]^T, \tag{72}$$

welcher am Anfang und Ende durch je ($N$ - 1)/2 Nullen erweitert ist. Hierbei ist $\underline{\tilde{c}}(l, i)$ das $i$-te Element des Vektors $\underline{\tilde{c}}(l)$ ($i$ = 0,1, ...). Das Ausgangssignal $c(k)$ setzt sich aus den Vektoren $\underline{c}(l)$ zusammen

$$[c(l \cdot FR - FR + 1), \ldots, c(l \cdot FR)]^T = \underline{c}(l). \tag{73}$$

In einer weiteren günstigen Ausführungsform der Erfindung kann die **Anpassung der Schrittweitensteuerung an Raumänderungen** nach Gl. (51) wie folgt verbessert werden:

Dazu wird ein Modell entwickelt, welches beschreibt, wie sich der Betrag des Übertragungsfunktionsabstandes bei Veränderungen der Raumimpulsantwort verhält. Aufgrund der Betrachtung der tatsächlichen akustischen Verhältnisse erlaubt dieses Modell eine bessere Nachbildung der Raumänderungen als in Gleichung (51).

Der Übertragungsfunktionsabstand ist die Differenz zwischen der tatsächlichen und der geschätzten Raumübertragungsfunktion. Raumänderungen, d.h. Veränderungen der akustischen Übertragungsstrecke, wirken sich auf die tatsächliche Raumübertragungsfunktion $H_a$ aus. Um diese Änderungen zu beschreiben wird folgender Ansatz verwendet:

$$|\Delta H_a| = \kappa' \cdot \frac{2\pi f}{c_0} \cdot \overline{\Delta r} \cdot |H_a|_{\max}. \tag{74}$$

Er besagt, dass der Betrag der Änderung der tatsächlichen Raumübertragungsfunktion $|\Delta H_a|$ bei einer bestimmten Frequenz proportional zu dieser Frequenz, zur mittleren Wegänderung von Objekten im Schallfeld $\overline{\Delta r}$ und zum maximalen Betrag der Übertragungsfunktion $|H_a|_{\max}$ ist. Die Proportionalität zu diesen drei Größen stellt die wesentliche erfindungsgemäße Aussage des verwendeten akustischen Modells zur Beschreibung der Auswirkungen von Veränderungen der akustischen Übertragungsstrecke auf die tatsächliche Raumübertragungsfunktion dar. Dabei ist $\kappa'$ ein Proportionalitätsfaktor und $c_0$ die Schallgeschwindigkeit in Luft.

Weiterhin lässt sich zeigen, dass der Betrag der Änderung der tatsächlichen Raumübertragungsfunktion annähernd der Änderung des Betrages des Übertragungsfunktionsabstandes $\tilde{V}(l, i)$ entspricht, weshalb gilt

$$\Delta|\underline{\tilde{V}}(l,i)| = \kappa' \cdot \frac{2\pi f_i}{c_0} \cdot \overline{\Delta r} \cdot |\underline{\tilde{G}}|_{\max}. \tag{75}$$

Die zum Frequenzindex *i* gehörende Frequenz wird durch $f_i$ angegeben. Ersetzt man die mittlere Wegänderung von Objekten im Schallfeld $\overline{\Delta r}$ durch das Produkt aus einer mittleren Bewegungsgeschwindigkeit von Objekten im Raum $\overline{v}$ und der Zeitdifferenz $\Delta t$, erhält man

$$\begin{aligned} \Delta|\underline{\tilde{V}}(l,i)| &= \kappa' \cdot \frac{2\pi f_i}{c_0} \cdot \overline{v} \cdot \Delta t \cdot |\underline{\tilde{G}}|_{\max} \\ &= \kappa' \cdot \frac{2\pi}{c_0} \cdot \overline{v} \cdot |\underline{\tilde{G}}|_{\max} \cdot \frac{f_i}{f_A} \cdot FR. \end{aligned} \tag{76}$$

Dadurch erfolgt eine Abschätzung von $\overline{\Delta r}$ anhand der Zeitdifferenz. Die Zeitdifferenz $\Delta t = FR/f_A$ folgt aus dem Zeitunterschied zwischen zwei Iterationsschritten. Fasst man nun noch alle konstanten Größen in dem Proportionalitätsfaktor $\kappa$ zusammen, lautet die Gleichung schließlich

$$\Delta|\underline{\tilde{V}}(l,i)| = \kappa \cdot \frac{f_i}{f_A} \cdot FR \tag{77a}$$

mit

$$\kappa = \kappa' \cdot \frac{2\pi}{c_0} \cdot \overline{v} \cdot |\underline{\tilde{G}}|_{\max} \tag{77b}$$

Ein geeigneter Wert für $\kappa'$ muss für einen gegebenen Anwendungsfall durch Simulation gefunden werden.
Die Gleichung zur Anpassung des Vektors $\underline{D}(l)$ lautet mit Gl. (21) schließlich:

$$\underline{D}(l,i) = \left( \sqrt{\underline{D(l,i)}} + \Delta|\underline{\tilde{V}}(l,i)| \right)^2. \tag{78}$$

**Bezugszeichenliste**

Figur 1 - Allgemeiner Aufbau einer Akustischen Echokompensation

| 101 | $s(k) + n(k)$ |
|-----|----------------|
| 102 | $y(k)$ |
| 103 | $m(k)$ |
| 104 | $\hat{y}(k)$ |
| 105 | $q(k) = e(k) + s(k) + n(k)$ |
| 106 | $g(k,i)$ |
| 107 | $\hat{g}(k,i)$ |
| 108 | $x(k)$ |
| 109 | Adder 1 |
| 110 | Adder 2 |
| 111 | Lautsprecher |
| 112 | Mikrofon |
| 113 | Adaptionsalgorithmus |

Figur 2 - FBLMS-Verfahren zur Akustischen Echokompensation, (206) bezeichnet die Schrittweite, welche die Adaption des Echokompensationsfilters steuert

| 201 | $\tilde{\underline{m}}(l)$ |
|---|---|
| 202 | $\tilde{\underline{q}}(l)$ |
| 203 | $\hat{\tilde{\underline{y}}}(l)$ |
| 204 | $\tilde{Q}(l)$ |
| 205 | $\underline{X}^*(l)$ |
| 206 | $\underline{\mu}(l)$ |
| 207 | $\hat{\tilde{\underline{G}}}(l+1)$ |
| 208 | $\hat{\tilde{\underline{G}}}(l)$ |
| 209 | $\underline{X}(l)$ |
| 210 | $\hat{\tilde{\underline{Y}}}(l)$ |
| 211 | $\underline{x}(l)$ |
| 212 | $(\ )^*$, Konjugiert-komplex-Operator |
| 213 | Multiplikator 1 |
| 214 | Multiplikator 2 |
| 215 | Adder 1 |
| 216 | Multiplikator 3 |
| 217 | Adder 2 |
| 218 | Verzögerung |
| 219 | Fensterung mit $\mathbf{W}_y$ |
| 220 | Fensterung mit $\mathbf{W}g$ |
| 221 | Blockbildung |
| 222 | Rekonstruktion |
| 223 | Ergebnis der Adaptionsgleichung: $\mathbf{F}\mathbf{W}_g\mathbf{F}^{-1}\,\underline{\mu}(l)\mathbf{X}^*(l)\tilde{\underline{Q}}(l)$ |

Figur 3 - Blockbildungsschema zum FBLMS-Verfahren zur Akustischen Echokompensation

Figur 4 - Aufbau des Gesamtsystems mit Restechoreduktionsfilter und Störgeräuschreduktionsfilter

| 401 | $c(k)$ |
|---|---|
| 402 | $m(k)$ |
| 403 | $q(k) = e(k) + s(k) + n(k)$ |
| 404 | $x(k)$ |

Figur 5 - Funktionsweise des Restechoredu`lktionsfilters

| 501 | $q(k) = e(k) + s(k) + n(k)$ |
|---|---|
| 502 | $\hat{\underline{\Phi}}_{ee}$ |

Figur 6 - Blockschaltbild zum erfindungsgemäßen Restecho- und Geräuschreduktionsfilter

| 601 | $\underline{q}(l)$ |
|---|---|
| 602 | $\underline{Q}(l)$ |
| 603 | $\tilde{\underline{c}}(l)$ |
| 604 | $\hat{\underline{H}}(l)$ |
| 605 | $\hat{\underline{\Phi}}_{ee}(l)$ |
| 606 | $\hat{\underline{\Phi}}_{nn}(l)$ |
| 607 | $\hat{\underline{\Phi}}_{qq}(l)$ |
| 608 | $\underline{\Phi}_{ss}(l)$ |
| 609 | Fensterung mit $\mathbf{W}_h$ |
| 610 | Fensterung mit $\mathbf{W}_{\varphi}$ |
| 611 | Berechnung von $\hat{\underline{\Phi}}_{qq}(l)$ |
| 612 | Schätzung von $\hat{\underline{\Phi}}_{nn}(l)$ |

613  Schätzung von $\hat{\underline{\Phi}}_{ss}(l)$
614  Filterberechnung
615  Filterübertragungsfunktion $H(l)$
616  Multiplikator
617  Filterschätzalgorithmus
618  Restecho- und Störgeräuschreduktionsfilter

Figur 7 - Blockbildungsschema zur Restecho- und Geräuschreduktion

Figur 8 - Blockschaltbild zur erfindungsgemäßen Ermittlung der Schrittweite $\underline{\mu}(l)$

801  $\underline{D}(l)$
802  $\underline{D}(l-1)$
803  $\underline{\mu}(l)$
804  $\underline{\Phi}_{nn}(l)$
805  $\underline{\Phi}_{qq}(l)$
806  $\underline{\Phi}_{xx}(l)$
807  Entscheidung: $\hat{\underline{\Phi}}_{qq}(l) \geq \alpha \cdot \hat{\underline{\Phi}}_{nn}(l)$ ?
808  Schätzung von $\underline{D}(l)$
809  Anpassung von $\underline{D}(l)$ an Raumänderungen
810  Berechnung der Schrittweite
811  Verzögerung
812  Inversion ( )$^{-1}$

## Formelzeichenliste

$c(k)$    Ausgangssignal der Geräuschreduktion
$\underline{c}(l)$    Ausgangssignalvektor
$\tilde{\underline{c}}(l)$    erweiterter Ausgangssignalvektor
$c_0$    Schallgeschwindigkeit in Luft
$\underline{D}(l)$    Betragsquadrat des Übertragungsfunktionsabstandsvektors
$\mathbf{D}(l)$    Diagonalmatrix zum Vektor $\underline{D}(l)$
$e(k)$    Restechosignal
$\tilde{\underline{e}}(l)$    erweiterter Restechosignalvektor
$\tilde{\underline{E}}(l)$    diskrete Fourier-Transformierte von $\tilde{\underline{e}}(l)$
$\underline{f}$    Frequenz
$f_A$    Abtastfrequenz
$\mathbf{F}$    DFT-Matrix
$FR$    Framerate
$g(k, i)$, $\hat{g}(k, i)$    $i$-ter Abtastwert der Raumimpulsantwort zum Zeitpunkt $k$
$\underline{g}(l)$    erweiterter Raumimpulsantwortvektor
$\underline{g}(l)$    geschätzter Raumimpulsantwortvektor
    erweiterter geschätzter Raumimpulsantwortvektor
$\tilde{\underline{G}}(l)$    diskrete Fourier-Transformierte von $\tilde{\underline{g}}(l)$
    diskrete Fourier-Transformierte von
$|\tilde{\underline{G}}|_{max}$    Parameter der Schrittweitensteuerung (Maximalwert der Raumübertragungsfunktion)
$h(k, i)$    $i$-ter Abtastwert der Impulsantwort des Geräuschreduktionsfilters zum Zeitpunkt $k$
$H_a$    akustische Übertragungsfunktion
$\hat{H}_a$    geschätzte akustische Übertragungsfunktion
$H(l)$    gewünschte Übertragungsfunktion des Restecho- und Geräuschreduktionsfilters
$\tilde{H}(l)$    Übertragungsfunktion des Restecho- und Geräuschreduktionsfilters
$j = \sqrt{-1}$    imaginäre Einheit
$k$    Zeitindex, Wellenzahl
$l$    Blockindex, Iterationsindex der Echokompensation
$L$    Blocklänge bei der Echokompensation

$m(k)$      Mikrofonsignal

$\underline{m}(l)$      Mikrofonsignalvektor

$\underline{\tilde{m}}(l)$      erweiterter Mikrofonsignalvektor

$\underline{M}$      FFT-Länge

$n(k)$      Rauschsignal

$\underline{\tilde{n}}(l)$      erweiterter Rauschsignalvektor

$\underline{\tilde{N}}(l)$      diskrete Fourier-Transformierte von $\underline{\tilde{n}}(l)$

$\underline{N}$      Filterlänge

$p$      Schalldruck

$q$      Schallfluss

$q(k)$      Ausgangssignal der Echokompensation

$\underline{q}(l)$      Ausgangssignalvektor der Echokompensation, Eingangssignalvektor der Restecho- und Geräuschreduktion

$\underline{\tilde{q}}(l)$      erweiterter Ausgangssignalvektor der Echokompensation

$\underline{q}'(l)$      verkürzter Ausgangssignalvektor der Echokompensation

$\underline{Q}(l)$      diskrete Fourier-Transformierte von $\underline{q}(l)$

$\underline{\tilde{Q}}(l)$      diskrete Fourier-Transformierte von $\underline{\tilde{q}}(l)$

$\mathbf{Q}(l)$      Diagonalmatrix zum Vektor $\underline{Q}(l)$

$s(k)$      Sprachsignal

$\underline{\tilde{s}}(l)$      erweiterter Sprachsignalvektor

$\underline{\tilde{S}}(l)$      diskrete Fourier-Transformierte von $\underline{\tilde{s}}(l)$

$\bar{v}$      Parameter der Schrittweitensteuerung (mittlere Bewegungsgeschwindigkeit von Objekten im Raum)

$\underline{\tilde{v}}(l)$      erweiterter Systemabstandsvektor

$\underline{\tilde{V}}(l)$      diskrete Fourier-Transformierte von $\underline{\tilde{v}}(l)$ (Übertragungsfunktionsabstandsvektor)

$\mathbf{W}_c, \mathbf{W}_g, \mathbf{W}_h, \mathbf{W}_y$      Fenstermatrizen

$x(k)$      Lautsprechersignal

$\underline{x}(l)$      Lautsprechersignalvektor

$\underline{X}(l)$      diskrete Fourier-Transformierte von $\underline{x}(l)$

$\mathbf{X}(l)$      Diagonalmatrix zum Vektor $\underline{X}(l)$

$y(k)$      Echosignal

$\underline{\tilde{y}}(l)$      erweiterter Echosignalvektor

$\hat{y}(k)$      geschätztes Echosignal

$\underline{\hat{y}}(l)$      geschätzter Echosignalvektor

$\underline{\hat{\tilde{y}}}(l)$      erweiterter geschätzter Echosignalvektor

$\underline{\hat{\tilde{Y}}}(l)$      diskrete Fourier-Transformierte von

$\alpha$      Parameter der spektralen Subtraktion

$\beta$      Parameter der Geräuschreduktion

$\gamma$      Parameter der Geräuschreduktion

$\kappa, \kappa'$      Proportionalitätsfaktoren in der Schrittweitensteuerung der Echokompensation

$\mu, \mu_1, \mu_2$      Schrittweitenfaktoren bei der Echokompensation

$\underline{\mu}(l)$      Schrittweitenvektor bei der Echokompensation

$\underline{\mu}(l)$      Diagonalmatrix zum Vektor $\underline{\mu}(l)$

$\rho$      Glättungsfaktor zur Berechnung von Kurzzeitleistungsspektren

$\rho_0$      Dichte von Luft

$\tau$      Zeitkonstante zur Berechnung von Kurzzeitleistungsspektren

$\tau_n$      Zeitkonstante bei der Schätzung des Rauschleistungsspektrums

$\Omega$      normierte Frequenz der Fourier-Transformierten einer zeitdiskreten Funktion

**Patentansprüche**

1. Verfahren zur Steuerung des Adaptionsverhaltens einer akustischen Echokompensation, wobei die Echokompensation mit einer frequenz- und zeitabhängigen und an eine Umgebungssituation angepassten Steuerung (810) einer Adaptionsschrittweite $\underline{\mu}(l)$ (803) eines Echokompensationsfilters (107) erfolgt und die Ermittlung (810) der Adaptionsschrittweite $\underline{\mu}(l)$ (803) des Echokompensationsfilters (107) unter Nutzung eines Übertragungsfunktionsabstandes $\underline{D}(l)$ (801) zwischen einer Raumimpulsantwort $\underline{g}(l)$ und einer Impulsantwort des Echokompensationsfilters $\underline{\hat{g}}(l)$

erfolgt, **dadurch gekennzeichnet,**

• **dass** der Übertragungsfunktionsabstand $\underline{D}(l)$ (801) anhand eines Kurzzeitleistungsspektrums eines Hintergrundrauschens $\hat{\underline{\Phi}}_{nn}(l)$ (804), eines Kurzzeitleistungsspektrums eines Ausgangssignals der akustischen Echokompensation $\hat{\underline{\Phi}}_{qq}(l)$ (805) und eines Kurzzeitleistungsspektrums eines Lautsprechersignals $\hat{\underline{\Phi}}_{xx}(l)$ (806) mit Hilfe einer spektralen Subtraktion, gemäß Gleichung

$$\underline{D}'(l,i) = \frac{M}{L} \frac{1}{\hat{\underline{\Phi}}_{xx}(l,i)} \cdot \begin{cases} \hat{\underline{\Phi}}_{qq}(l,i) - \hat{\underline{\Phi}}_{nn}(l,i) & \hat{\underline{\Phi}}_{qq}(l,i) \geq \alpha \cdot \hat{\underline{\Phi}}_{nn}(l,i) \\ (\alpha - 1)\hat{\underline{\Phi}}_{nn}(l,i) & \hat{\underline{\Phi}}_{qq}(l,i) < \alpha \cdot \hat{\underline{\Phi}}_{nn}(l,i) \end{cases},$$

und einer Minimalwertabschätzung, gemäß Gleichung $\underline{D}(l) = \min(\underline{D}(l-1), \underline{D}'(l))$, berechnet wird, und
• **dass** in die Ermittlung (808) des Übertragungsfunktionsabstandes $\underline{D}(l)$ (801) das Kurzzeitleistungsspektrum des Hintergrundrauschens $\hat{\underline{\Phi}}_{nn}(l)$ (804) einfließt, welches in einer zusätzlich zur Echokompensation durchgeführten Störgeräuschschätzung (606) ermittelt wird.

2. Verfahren nach Anspruch 1, **dadurch ge- kennzeichnet, dass** die Steuerung der Adaptionsschrittweite $\underline{\mu}(l)$ (803) des Echokompensationsfilters (107) auch unter Vorhandensein von Störgeräuschen und bei Gegensprechen erfolgt und nicht völlig zum Stillstand kommt.

3. Verfahren nach Anspruch 1 oder 2, **dadurch gekennzeichnet, dass** die Steuerung der Adaptionsschrittweite $\underline{\mu}(l)$ (803) des Echokompensationsfilters (107) ohne Gegensprechdetektion erfolgt.

4. Verfahren nach einem der Ansprüche 1 bis 3, **dadurch gekennzeichnet, dass** eine im Adaptionsverfahren (113) ermittelte Schätzung eines Kurzzeitleistungsspektrums eines Restechosignals $\hat{\underline{\Phi}}_{ee}(l)$ (605) für eine Restechounterdrückung eingesetzt wird.

5. Verfahren nach einem der Ansprüche 1 bis 4, **dadurch gekennzeichnet, dass** die zusätzlich zur Echokompensation durchgeführte Schätzung des Kurzzeitleistungsspektrums des Hintergrundrauschens $\hat{\underline{\Phi}}_{nn}(l)$ (804) für eine Störgeräuschunterdrückung eingesetzt wird.

6. Verfahren nach einem der Ansprüche 1 bis 5, **dadurch gekennzeichnet, dass** die zusätzlich zur Echokompensation durchgeführte Schätzung des Kurzzeitleistungsspektrums des Hintergrundrauschens $\hat{\underline{\Phi}}_{nn}(l)$ (804) in einem Verfahren zur Störgeräuschunterdrückung enthalten ist.

7. Verfahren nach einem der Ansprüche 1 bis 6, **dadurch gekennzeichnet, dass** die Restechounterdrückung und die Störgeräuschunterdrückung mittels einer der Echokompensation nachgelagerten Filterung zur Restechounterdrückung und zur Störgeräuschunterdrückung erfolgen.

8. Verfahren nach einem der Ansprüche 1 bis 7, **dadurch gekennzeichnet, dass** die Restechounterdrückung, die Störgeräuschunterdrückung und die Echokompensation im Frequenzbereich unter Nutzung gemeinsamer Variablen durchgeführt werden.

9. Verfahren nach einem der Ansprüche 1 bis 8, **dadurch gekennzeichnet, dass** die Filterung zur Restechounterdrückung in Verbindung mit einer Echokompensation durchgeführt wird und die in der Echokompensation ermittelten Informationen über das Kurzzeitleistungsspektrum des Restechosignals $\hat{\underline{\Phi}}_{ee}(l)$ (605) für die Unterdrückung eines Restechosignals $e(k)$ im Ausgangssignal $q(k)$ (105) der Echokompensation eingesetzt werden.

10. Verfahren nach einem der Ansprüche 1 bis 9, **dadurch gekennzeichnet, dass** zur Berechnung einer Filterfunktion zur Restechounterdrückung und einer Filterfunktion zur Störgeräuschunterdrückung der Optimalfilter-Ansatz verwendet wird.

11. Verfahren nach einem der Ansprüche 1 bis 10, **dadurch gekennzeichnet, dass** die Filterfunktion zur Restechounterdrückung und die Filterfunktion zur Störgeräuschunterdrückung in einer gemeinsamen Filterfunktion (618) zur Restecho- und Störgeräuschunterdrückung zusammengefasst werden.

**12.** Verfahren nach einem der Ansprüche 1 bis 11, **dadurch gekennzeichnet, dass** zur Kombination von Restecho- und Störgeräuschunterdrückung das Kurzzeitleistungsspektrum des Restechosignals $\hat{\underline{\Phi}}_{ee}(l)$ (605) und das Kurzzeitleistungsspektrum des Hintergrundrauschens $\hat{\underline{\Phi}}_{nn}(l)$ (804) verwendet werden und in die Berechnung (613) eines Kurzzeitleistungsspektrums eines Sprachsignals $\hat{\underline{\Phi}}_{ss}(l)$ (608) mittels einer spektralen Subtraktion einfließen.

**13.** Verfahren nach einem der Ansprüche 1 bis 12, **dadurch gekennzeichnet, dass** das Kurzzeitleistungsspektrum des Restechosignals $\hat{\underline{\Phi}}_{ee}(l)$ (605) anhand des Übertragungsfunktionsabstandes $\underline{D}(l)$ (801) ermittelt wird.

**14.** Verfahren nach einem der Ansprüche 1 bis 13, **dadurch gekennzeichnet, dass** eine Anpassung des Übertragungsfunktionsabstandes $\underline{D}(l)$ (801) an Raumänderungen (809) anhand eines akustischen Modells, welches ein Übertragungsverhalten zwischen einem Lautsprechersignal und einem Mikrofonsignal beschreibt, vorgenommen wird.

**15.** Verfahren nach einem der Ansprüche 1 bis 14, **dadurch gekennzeichnet, dass** das akustische Modell die Anpassung des Übertragungsfunktionsabstandes $\underline{D}(l)$ (801) in Abhängigkeit von einer Frequenz, einer mittleren Bewegungsgeschwindigkeit von Objekten im Raum, einer Schallgeschwindigkeit und einem maximalen Betrag einer Raumübertragungsfunktion beschreibt.

**Claims**

**1.** Method for controlling the adaptive behaviour of an acoustic echo compensation, wherein the echo compensation is effectuated by way of a frequency- and time-dependent control (810), adapted to an environmental situation, of an adaptive increment $\underline{\mu}(l)$ (803) of an echo compensation filter (107) and the adaptive increment $\underline{\mu}(l)$ (803) of the echo compensation filter (107) is ascertained using a transfer function distance $\underline{D}(l)$ (801) between a room impulse response $\underline{g}(l)$ and an impulse response of the echo compensation filter $\hat{\underline{g}}(l)$,
**characterized**

• **in that** the transfer function distance $\underline{D}(l)$ (801) is calculated on the basis of a short-term power spectrum of a background noise $\hat{\underline{\Phi}}_{nn}(l)$ (804), a short-term power spectrum of an output signal of the acoustic echo compensation $\hat{\underline{\Phi}}_{qq}(l)$ (805) and a short-term power spectrum of a loudspeaker signal $\hat{\underline{\Phi}}_{xx}(l)$ (806) with the aid of a spectral subtraction according to the equation

$$\underline{D}'(l,i) = \frac{M}{L} \cdot \frac{1}{\hat{\underline{\Phi}}_{xx}(l,i)} \cdot \begin{cases} \hat{\underline{\Phi}}_{qq}(l,i) - \hat{\underline{\Phi}}_{nn}(l,i) & \hat{\underline{\Phi}}_{qq}(l,i) \geq \alpha \cdot \hat{\underline{\Phi}}_{nn}(l,i) \\ (\alpha-1)\hat{\underline{\Phi}}_{nn}(l,i) & \hat{\underline{\Phi}}_{qq}(l,i) < \alpha \cdot \hat{\underline{\Phi}}_{nn}(l,i) \end{cases}$$

and a minimum value estimate according to the equation $\underline{D}(l) = min(\underline{D}(l-1), \underline{D}'(l))$, and
• **in that** the short-term power spectrum of the background noise $\hat{\underline{\Phi}}_{nn}(l)$ (804) is included in ascertaining (808) the transfer function distance $\underline{D}(l)$ (801), said short-term power spectrum of the background noise being ascertained in a noise estimation (606) carried out in addition to the echo compensation.

**2.** Method according to Claim 1, **characterized in that** the control of the adaptive increment $\underline{\mu}(l)$ (803) of the echo compensation filter (107) is effectuated even in the presence of noise and in the case of duplexing and does not come to a complete halt.

**3.** Method according to Claim 1 or 2, **characterized in that** the control of the adaptive increment $\underline{\mu}(l)$ (803) of the echo compensation filter (107) is effectuated without duplexing detection.

**4.** Method according to any one of Claims 1 to 3, **characterized in that** an estimate of a short-term power spectrum of a residual echo signal $\hat{\underline{\Phi}}_{ee}(l)$ (605), ascertained in the adaptive method (113), is used for a residual echo suppression.

**5.** Method according to any one of Claims 1 to 4, **characterized in that** the estimate of the short-term power spectrum of the background noise $\hat{\underline{\Phi}}_{nn}(l)$ (804), carried out in addition to the echo compensation, is used for a noise suppression.

**6.** Method according to any one of Claims 1 to 5, **characterized in that** the estimate of the short-term power spectrum of the background noise $\hat{\underline{\Phi}}_{nn}(l)$ (804), carried out in addition to the echo compensation, is contained in a method for noise suppression.

7. Method according to any one of Claims 1 to 6, **characterized in that** the residual echo suppression and the noise suppression are effectuated by means of filtering, disposed downstream of the echo compensation, for residual echo suppression and for noise suppression.

8. Method according to any one of Claims 1 to 7, **characterized in that** the residual echo suppression, the noise suppression and the echo compensation are carried out in the frequency domain using common variables.

9. Method according to any one of Claims 1 to 8, **characterized in that** the filtering for the residual echo suppression is carried out in conjunction with an echo compensation and the information about the short-term power spectrum of the residual echo signal $\hat{\underline{\Phi}}_{ee}(l)$ (605), ascertained in the echo compensation, is used for the suppression of a residual echo signal $e(k)$ in the output signal $q(k)$ (105) of the echo compensation.

10. Method according to any one of Claims 1 to 9, **characterized in that** the ideal filter approach is used for calculating a filter function for residual echo suppression and a filter function for noise suppression.

11. Method according to any one of Claims 1 to 10, **characterized in that** the filter function for residual echo suppression and the filter function for noise suppression are combined in a common filter function (618) for residual echo and noise suppression.

12. Method according to any one of Claims 1 to 11, **characterized in that** the short-term power spectrum of the residual echo signal $\hat{\underline{\Phi}}_{ee}(l)$ (605) and the short-term power spectrum of the background noise $\hat{\underline{\Phi}}_{nn}(l)$ (804) are used for combining residual echo and noise suppression and are included in the calculation (613) of a short-term power spectrum of a speech signal $\hat{\underline{\Phi}}_{ss}(l)$ (608) by means of a spectral subtraction.

13. Method according to any one of Claims 1 to 12, **characterized in that** the short-term power spectrum of the residual echo signal $\hat{\underline{\Phi}}_{ee}(l)$ (605) is ascertained on the basis of the transfer function distance $\underline{D(l)}$ (801).

14. Method according to any one of Claims 1 to 13, **characterized in that** the transfer function distance $\underline{D(l)}$ (801) is adapted to room changes (809) on the basis of an acoustic model which describes a transfer behaviour between a loudspeaker signal and a microphone signal.

15. Method according to any one of Claims 1 to 14, **characterized in that** the acoustic model describes the adaptation of the transfer function distance $\underline{D(l)}$ (801) depending on a frequency, a mean movement speed of objects in the room, a sound speed and a maximum absolute value of a room transfer function.

**Revendications**

1. Procédé de commande du comportement d'adaptation d'une compensation d'écho acoustique, la compensation d'écho étant effectuée avec une commande (810), dépendante de la fréquence et du temps et adaptée à l'environnement, d'un incrément d'adaptation $\underline{\mu}(l)$ (803) d'un filtre de compensation d'écho (107) et la détermination (810) de l'incrément d'adaptation $\underline{\mu}(l)$ (803) du filtre de compensation d'écho (107) étant effectuée en utilisant un écart de fonction de transfert $\underline{D}(l)$ (801) entre une réponse impulsionnelle dans l'espace $\underline{g}(l)$ et une réponse impulsionnelle du filtre de compensation d'écho $\hat{\underline{g}}(l)$, caractérisé en ce

* que l'écart de fonction de transfert $\underline{D}(l)$ (801) est calculé au moyen d'un spectre de puissance de courte durée d'un bruit de fond $\hat{\underline{\Phi}}_{nn}(l)$ (804), d'un spectre de puissance de courte durée d'un signal de sortie de la compensation d'écho acoustique $\hat{\underline{\Phi}}_{qq}(l)$ (804) et d'un spectre de puissance de courte durée d'un signal de haut-parleur $\hat{\underline{\Phi}}_{xx}(l)$ (806) à l'aide d'une soustraction spectrale, selon l'équation

$$\underline{D}'(l,i) = \frac{M}{L} \frac{1}{\hat{\Phi}xx(l,i)} \cdot \begin{cases} \hat{\Phi}qq(l,i) - \hat{\Phi}nn(l,i) & \hat{\Phi}qq(l,i) \geq \alpha \cdot \hat{\Phi}nn(l,i) \\ (\alpha-1)\hat{\Phi}nn(l,i) & \hat{\Phi}qq(l,i) < \alpha \cdot \hat{\Phi}nn(l,i) \end{cases} '$$

et une estimation de la valeur minimale selon l'équation $\underline{D}(1) = \min(\underline{D}(l-1), \underline{D}'(l))$, et

\* que dans la détermination (808) de l'écart de fonction de transfert $\underline{D}(l)$ (801) intervient le spectre de puissance de courte durée du bruit de fond $\hat{\underline{\Phi}}_{nn}(l)$ (804) qui est déterminé dans une estimation de bruit parasite (606) effectuée en plus de la compensation d'écho.

**2.** Procédé selon la revendication 1, **caractérisé en ce que** la commande de l'incrément d'adaptation $\underline{\mu}(l)$ (803) du filtre de compensation d'écho (107) est également effectuée en présence de bruits parasites et lors d'une interphonie et n'est pas complètement arrêtée.

**3.** Procédé selon la revendication 1 ou 2, **caractérisé en ce que** la commande de l'incrément d'adaptation $\underline{\mu}(l)$ (803) du filtre de compensation d'écho (107) est effectuée sans détection d'interphonie.

**4.** Procédé selon l'une des revendications 1 à 3, **caractérisé en ce qu'**une estimation d'un spectre de puissance de courte durée d'un signal d'écho résiduel $\hat{\underline{\Phi}}_{ee}(l)$ (605) déterminée dans le procédé d'adaptation (113) est utilisé pour une inhibition de l'écho résiduel.

**5.** Procédé selon l'une des revendications 1 à 4, **caractérisé en ce que** l'estimation du spectre de puissance de courte durée du bruit de fond $\hat{\underline{\Phi}}_{nn}(l)$ (804) effectuée en plus de la compensation d'écho est utilisée pour une inhibition du bruit parasite.

**6.** Procédé selon l'une des revendications 1 à 5, **caractérisé en ce que** l'estimation du spectre de puissance de courte durée du bruit de fond $\hat{\underline{\Phi}}_{nn}(l)$ (804) effectuée en plus de la compensation d'écho est incluse dans un procédé d'inhibition du bruit parasite.

**7.** Procédé selon l'une des revendications 1 à 6, **caractérisé en ce que** l'inhibition de l'écho résiduel et l'inhibition du bruit parasite sont effectuées au moyen d'un filtrage placé en aval de la compensation d'écho et servant à l'inhibition de l'écho résiduel et à l'inhibition du bruit parasite.

**8.** Procédé selon l'une des revendications 1 à 7, **caractérisé en ce que** l'inhibition de l'écho résiduel, l'inhibition du bruit parasite et la compensation d'écho dans la plage de fréquences sont effectuées en utilisant des variables communes.

**9.** Procédé selon l'une des revendications 1 à 8, **caractérisé en ce que** le filtrage servant à l'inhibition de l'écho résiduel est effectué en association avec une compensation d'écho et les informations déterminées dans la compensation d'écho sont utilisées par le biais du spectre de puissance de courte durée du signal d'écho résiduel $\hat{\underline{\Phi}}_{ee}(l)$ (605) pour l'inhibition d'un signal d'écho résiduel e(k) dans le signal de sortie q(k) de la compensation d'écho.

**10.** Procédé selon l'une des revendications 1 à 9, **caractérisé en ce que** l'approche du filtre optimal est utilisée pour le calcul d'une fonction de filtrage servant à l'inhibition de l'écho résiduel et d'une fonction de filtrage servant à l'inhibition du bruit parasite.

**11.** Procédé selon l'une des revendications 1 à 10, **caractérisé en ce que** la fonction de filtrage servant à l'inhibition de l'écho résiduel et la fonction de filtrage servant à l'inhibition du bruit parasite sont regroupées en une fonction de filtrage commune (618) servant à l'inhibition de l'écho résiduel et du bruit parasite.

**12.** Procédé selon l'une des revendications 1 à 11, **caractérisé en ce que** le spectre de puissance de courte durée du signal d'écho résiduel $\hat{\underline{\Phi}}_{ee}(l)$ (605) et le spectre de puissance de courte durée du bruit de fond $\hat{\underline{\Phi}}_{nn}(l)$ (804) sont utilisés pour la combinaison de l'inhibition de l'écho résiduel et du bruit parasite, et interviennent dans le calcul (613) d'un spectre de puissance de courte durée d'un signal vocal $\hat{\underline{\Phi}}_{ss}(l)$ (608) au moyen d'une soustraction spectrale.

**13.** Procédé selon l'une des revendications 1 à 12, **caractérisé en ce que** le spectre de puissance de courte durée du signal d'écho résiduel $\hat{\underline{\Phi}}_{ee}(l)$ (605) est déterminé au moyen de l'écart de fonction de transfert $\underline{D}(l)$ (801).

**14.** Procédé selon l'une des revendications 1 à 13, **caractérisé en ce qu'**une adaptation de l'écart de fonction de transfert $\underline{D}(l)$ (801) aux changements d'espace (809) est réalisée au moyen d'un modèle acoustique qui décrit un comportement de transfert entre un signal de haut-parleur et un signal de microphone.

**15.** Procédé selon l'une des revendications 1 à 14, **caractérisé en ce que** le modèle acoustique décrit l'adaptation de l'écart de fonction de transfert $\underline{D}(l)$ (801) en fonction d'une fréquence, d'une vitesse de déplacement moyenne d'objets dans l'espace, d'une vitesse du son et d'une valeur maximale d'une fonction de transfert dans l'espace.

Fig. 1:

Fig. 2:

$(l-2) \cdot FR$    $(l-1) \cdot FR$    $l \cdot FR$    $(l+1) \cdot FR$

$k$

| $M$ Abtastwerte | $\underline{x}(l)$ |

| $L$ Abtastwerte | $\underline{m}(l)$ |

| $L$ Abtastwerte | $\underline{q}(l)$ |

| $FR$ Abtastwerte | $\underline{q}'(l)$ |

| $M$ Abtastwerte | $\underline{x}(l+1)$ |

| $L$ Abtastwerte | $\underline{m}(l+1)$ |

| $L$ Abtastwerte | $\underline{q}(l+1)$ |

| $FR$ Abtastwerte | $\underline{q}'(l+1)$ |

Fig. 3:

402 → Echokompensation → 403 → Restecho-reduktion → Geräusch-reduktion → 401

404 ←

$x(k)\_2$

Fig. 4:

501

Restecho-reduktionsfilter →

Filterschätz-algorithmus

502

Fig. 5:

25

Restecho- und Geräuschreduktionsfilter (618)

601 → FFT $\qquad$ 602

610

603

604

Filterschätzalgorithmus (617)

Berechn.
$\hat{\underline{\Phi}}_{qq}(l)$ (611)

607

FFT

609

Schätz.
$\hat{\underline{\Phi}}_{nn}(l)$ (612)

606

IFFT

Schätz.
$\hat{\underline{\Phi}}_{ss}(l)$ (613)

608

Filt.berechn.
(614)

605

Fig. 6:

$(l-2) \cdot FR$ $\qquad$ $(l-1) \cdot FR$ $\qquad$ $l \cdot FR$ $\qquad$ $(l+1) \cdot FR$

$k$

$M$ Abtastwerte $\qquad$ $\underline{q}(l)$

$FR$ Abtastwerte $\qquad$ $\underline{c}(l)$

$M$ Abtastwerte $\qquad$ $\underline{q}(l+1)$

$FR$ Abtastwerte $\qquad$ $\underline{c}(l+1)$

Fig. 7:

26

806          804     805

812              807              812

Schätzung von
$\underline{D}(l)$ 808          801          Berechnung
der
Schrittweite
810          803

802

811

Anpassung von
$\underline{D}(l)$ an
Raumänderungen
809

Fig. 8:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040264686 A1
- US 20050147235 A1
- US 20050063536 A1

**In der Beschreibung aufgeführte Nicht-Patentliteratur**

- **HAYKIN, S.** Adaptive Filter Theory. Prentice Hall, 2002
- **FARHANG-BOROUJENY,B.** Adaptive Filters - Theory and Applications. Wiley & Sons, 1998
- **OPPENHEIM, A. V. ; SCHÄFER, R. W.** *Zeitdiskrete Signalverarbeitung,* 1995
- **FARHANG-BOROUJENY, B.** Adaptive Filters - Theory and Applications. Wiley & Sons, 1998
- **NITSCH, B., H.** Adaptive Filter im Frequenzbereich für Freisprecheinrichtungen. *Dissertation,* 2000
- **GUSTAFSSON, P. ; JAX, P. ; KAMPHAUSEN, A. ; VARY, P.** A postfilter for echo and noise reduction avoiding the problem of musical tones. *ICASSP,* 1999
- **ENZNER, G.** Hands-Free Communication: A unified concept of acoustic echo cancellation and residual echo suppression. *DAGA,* 2003, 744-745
- **HOFFMANN, R.** Signalanalyse und -erkennung. Springer, 1998
- **MANOLAKIS, D., G. ; INGLE, V., K. ; KOGON, S., M.** Statistical and adaptive signal processing. McGraw-Hill, 2000